(19) Europäisches Patentamt
European Patent Office
Office européen des brevets

(11) **EP 4 568 322 A1**

(12) **EUROPEAN PATENT APPLICATION**
published in accordance with Art. 153(4) EPC

(43) Date of publication:
**11.06.2025 Bulletin 2025/24**

(21) Application number: **23858883.4**

(22) Date of filing: **29.06.2023**

(51) International Patent Classification (IPC):
*H04W 24/02* (2009.01)

(52) Cooperative Patent Classification (CPC):
**H04B 7/0456; H04B 7/06; H04W 24/02**

(86) International application number:
**PCT/CN2023/103643**

(87) International publication number:
**WO 2024/045845 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.08.2022 CN 202211058367**

(71) Applicant: **Huawei Technologies Co., Ltd.
Shenzhen, Guangdong 518129 (CN)**

(72) Inventors:
• **LI, Xi**
**Shenzhen, Guangdong 5181299 (CN)**
• **CAI, Shijie**
**Shenzhen, Guangdong 518129 (CN)**
• **GAO, Xiang**
**Shenzhen, Guangdong 518129 (CN)**
• **LIU, Kunpeng**
**Shenzhen, Guangdong 518129 (CN)**

(74) Representative: **Pfenning, Meinig & Partner mbB
Patent- und Rechtsanwälte
Theresienhöhe 11a
80339 München (DE)**

(54) **SRS TRANSMISSION METHOD AND APPARATUS**

(57) This application provides an SRS transmission method and apparatus, and the method is jointly performed by a terminal device and a network device. The SRS transmission method in this application includes: The network device sends configuration information of an SRS resource set to the terminal device. The terminal device obtains the SRS resource set. The terminal device determines a first antenna set and a second antenna set. The terminal device determines an antenna corresponding to at least one port included in each of a plurality of SRS resources. The terminal device sends an SRS for measuring an uplink channel of the corresponding antenna to a base station through the at least one port included in each SRS resource. The network device receives, through the at least one port included in each of the plurality of SRS resources, the SRS sent by the terminal device. The network device determines, based on the SRS resource, a target antenna set to which an antenna corresponding to a port for receiving the SRS belongs. This application can improve precoding accuracy, and ensure signal transmission performance of a split 8R UE.

500

Network device — Terminal device

501: Send configuration information of an SRS resource set

502: Obtain the SRS resource set

503: Determine a first antenna set and a second antenna set

504: Determine an antenna corresponding to at least one port included in each of a plurality of SRS resources

506: Separately receive, through the at least one port included in each of the plurality of SRS resources, the SRS sent by the terminal device

505: Separately send an SRS for measuring an uplink channel of a corresponding antenna to the base station through the at least one port included in each SRS resource

507: Determine, based on the SRS, a target antenna set to which an antenna corresponding to a port for receiving the SRS belongs

508: Send a first downlink signal based on an antenna in the first antenna set

509: Send a second downlink signal based on an antenna in the second antenna set

FIG. 5

# Description

This application claims priority to Chinese Patent Application No. 202211058367.X, filed with the China National Intellectual Property Administration on August 31, 2022 and entitled "SRS TRANSMISSION METHOD AND APPARATUS", which is incorporated herein by reference in its entirety.

## TECHNICAL FIELD

This application relates to communication technologies, and in particular, to an SRS transmission method and apparatus.

## BACKGROUND

Currently, a downlink peak transmission rate needs to be increased to 1.6 Gbps in the market. To meet this requirement, an 8R receiver may be used in downlink transmission. The 8R receiver is usually a device including eight receive antennas. Compared with a 4R receiver, the 8R receiver can significantly increase a downlink throughput of a single user in a cell and can also expand coverage of a cell edge user.

However, during multi-stream transmission (generally, a quantity of transport streams is greater than 4), the 8R receiver has problems of high implementation difficulty and high computational complexity.

## SUMMARY

This application provides an SRS transmission method and apparatus, to improve precoding accuracy and ensure signal transmission performance of a split 8R UE.

According to a first aspect, this application provides an SRS transmission method. The method is jointly performed by a terminal device and a network device, and includes: The network device sends configuration information of an SRS resource set to the terminal device. The terminal device obtains the SRS resource set. The terminal device determines a first antenna set and a second antenna set. The terminal device determines an antenna corresponding to at least one port included in each of a plurality of SRS resources. The terminal device sends an SRS for measuring an uplink channel of the corresponding antenna to a base station through the at least one port included in each SRS resource. The network device receives, through the at least one port included in each of the plurality of SRS resources, the SRS sent by the terminal device. The network device determines, based on the SRS resource, a target antenna set to which an antenna corresponding to the port for receiving the SRS belongs.

In this embodiment of this application, after the first antenna set and the second antenna set are determined, the network device may consider an 8R UE as two 4R UEs (virtual UEs), and separately measure uplink and downlink channels of the two virtual UEs. In this way, precoding can be performed based on a more accurate channel, to improve precoding accuracy, and ensure signal transmission performance of the split 8R UE.

The SRS resource set (SRS resource set) includes a plurality of SRS resources (SRS resource), and each SRS resource includes at least one port (port). For example, one SRS resource includes {1, 2, 4, 8} ports. The network device may periodically configure, for the terminal device, an SRS resource set for sending the SRS, and indicate the SRS resource set to the terminal device by using the configuration information, so that the terminal device sends the SRS by using the plurality of SRS resources included in the SRS resource set. For this process, refer to a related standard protocol. Details are not described herein again. It should be noted that, in this embodiment of this application, a quantity of SRS resource sets is not limited, and there may be one or more SRS resource sets.

The terminal device may obtain the SRS resource set by parsing the configuration information, and obtain the plurality of SRS resources included in the SRS resource set and the at least one port included in each SRS resource. For example, one SRS resource includes {1, 2, 4, 8} ports.

The first antenna set and the second antenna set respectively include M antennas and 8-M antennas in eight antennas, where M is a positive integer.

For ease of description, the following uses an 8R UE as an example for description. The 8R UE includes eight antennas. It is assumed that identifiers of the eight antennas are 0 to 7. The UE may group the eight antennas by using the following methods, to determine the first antenna set and the second antenna set. The foregoing splitting may be an implementation of grouping the eight antennas. A specific grouping manner is not limited in this embodiment of this application.

First method: The UE divides the eight antennas into two groups according to a preset rule, to obtain the first antenna set and the second antenna set.

The preset rule may be a rule negotiated by the base station and the UE in a configuration phase, or may be a rule determined and negotiated in a signaling interaction process. The preset rule may be manually set, may be set based on historical setting data, or may be set based on big data analysis. A manner and a basis of setting the preset rule are not specifically limited in this embodiment of this application.

In a possible implementation, the eight antennas may have a plurality of grouping results. For example, antennas identified as 0 to 3 belong to the first antenna set, and antennas identified as 4 to 7 belong to the second antenna set. For another example, antennas identified as odd numbers (1, 3, 5, and 7) belong to the first antenna set, and antennas identified as even numbers (0, 2, 4, and 6) belong to the second antenna set. For another example, the eight antennas are randomly divided into two groups, antennas identified as (0, 1, 4, and 7) belong to the first antenna set, and antennas identified as (2, 3, 5, and 6) belong to the second antenna set. The grouping result of the eight antennas is not specifically limited in this embodiment of this application.

Second method: The UE receives a CSI-RS sent by the base station, and then divides the eight antennas into two groups based on the CSI-RS, to obtain the first antenna set and the second antenna set.

The CSI-RS may be used for downlink channel measurement. Therefore, for the eight antennas, the base station may send the CSI-RS to the UE.

In this embodiment of this application, the UE may obtain a correlation between the eight antennas based on the CSI-RS, and then divide the eight antennas into two groups based on the correlation between the eight antennas, to obtain the first antenna set and the second antenna set.

The correlation may be represented by a similarity between every two antennas. Based on the similarity between every two of the eight antennas, four antennas with highest similarity may be grouped into a same antenna set.

In a possible implementation, the UE may send first grouping information to the base station. The first grouping information indicates SRS resources respectively corresponding to the first antenna set and the second antenna set.

Third method: The UE receives second grouping information sent by the base station. The second grouping information indicates the first antenna set and the second antenna set. Then, the UE determines the first antenna set and the second antenna set based on the second grouping information.

In this embodiment of this application, the base station may group the eight antennas of the UE, and then notify the UE of a grouping result by using the second grouping information. The second grouping information may clearly indicate the first antenna set and the second antenna set. For example, the second grouping information includes an antenna set identifier and an antenna identifier included in each antenna set: first antenna set 0 (antennas 0-3) and second antenna set 1 (antennas 4-7). For another example, the second grouping information includes an antenna identifier and a group identifier: antennas 0-3 0 (representing that the antennas 0 to 3 belong to the first antenna set), and antennas 4-7 1 (representing that the antennas 4 to 7 belong to the second antenna set). Alternatively, the second grouping information may implicitly indicate the first antenna set and the second antenna set. For example, in the second grouping information, identifiers (0 to 3) of four antennas written in the front belong to the first antenna set, and identifiers (4 to 7) of four antennas written in the back belong to the second antenna set. It should be noted that the second grouping information may alternatively be in another format. This is not specifically limited in this embodiment of this application.

In a possible implementation, if the UE groups the eight antennas by using the first method and the second method, the UE may not report a grouping result to the base station. That is, the UE does not send the first grouping information to the base station. In this way, grouping of the eight antennas of the UE is transparent and unknown for the base station.

At least one antenna corresponding to at least one port included in each SRS resource belongs to the first antenna set or the second antenna set. That is, each SRS resource includes at least one port, and the at least one port may correspond to at least one antenna of the terminal device (one port corresponds to one antenna). When the eight antennas of the terminal device are divided into two antenna sets, at least one antenna corresponding to at least one port included in one SRS resource belongs to one antenna set. For example, the SRS resource set includes one SRS resource, the SRS resource includes four ports, the four ports correspond to four antennas, and the four antennas belong to the first antenna set. For another example, the SRS resource set includes two SRS resources, one SRS resource includes two ports, the two ports correspond to two antennas, and the two antennas belong to the first antenna set. The other SRS resource includes one port, the port corresponds to one antenna, and the antenna belongs to the second antenna set.

The UE includes a transmit radio frequency channel and a receive radio frequency channel. The transmit radio frequency channel may alternatively be referred to as a transmit antenna port (Tx port), a transmit channel, or the like. The receive radio frequency channel may alternatively be referred to as a receive antenna port (Rx port), a receive channel, or the like. This is not specifically limited in this embodiment of this application.

To enable the UE to send the SRS on uplink channels of the eight antennas, to measure all uplink and downlink channels of the eight antennas, the SRS resource set may be designed based on a transmission and reception capability of the UE, especially a quantity of SRS resources included in the SRS resource set and a quantity of ports included in each SRS resource. In addition, to improve accuracy of SRS measurement, uplink and downlink channels of four antennas included in a same virtual UE in the two virtual UEs split from the 8R UE need to be measured within a short time interval as far as possible.

This embodiment of this application may include the following several cases: It is assumed that identifiers of the eight antennas of the UE are 0 to 7, identifiers of four antennas included in the first antenna set (corresponding to a first virtual UE) are 0 to 3, and identifiers of four antennas included in the second antenna set (corresponding to a second virtual UE) are 4 to 7. In addition, in the following description, there is no intersection of antennas corresponding to ports. To be specific, in any one of the following cases, one port in an SRS resource may correspond to one antenna, and different ports correspond to different antennas.

**(1) 1 transmit 8 receive (1T8R)**

When a quantity of transmit antenna ports of the terminal device is 1 and a quantity of receive antenna ports is 8, the SRS resource set includes eight SRS resources, and each SRS resource includes one port.
One port included in each of four SRS resources in the eight SRS resources corresponds to one of the four antennas in the first antenna set, and one port included in each of the other four SRS resources in the eight SRS resources corresponds to one of the four antennas in the second antenna set.

**(2) 2 transmit 8 receive (2T8R)**

When the quantity of transmit antenna ports of the terminal device is 2 and the quantity of receive antenna ports is 8, the SRS resource set includes four SRS resources, and each SRS resource includes two ports.
Two ports included in each of two SRS resources in the four SRS resources correspond to two of the four antennas in the first antenna set, and two ports included in each of the other two SRS resources in the four SRS resources correspond to two of the four antennas in the second antenna set.

**(3) 4 transmit 8 receive (4T8R)**

When the quantity of transmit antenna ports of the terminal device is 4 and the quantity of receive antenna ports is 8, the SRS resource set includes two SRS resources, and each SRS resource includes four ports.
Four ports included in one SRS resource in the two SRS resources correspond to the four antennas in the first antenna set, and four ports included in the other SRS resource in the two SRS resources correspond to the four antennas in the second antenna set.

**(4) 6 transmit 8 receive (6T8R)**

When the quantity of transmit antenna ports of the terminal device is 6 and the quantity of receive antenna ports is 8, the SRS resource set includes three SRS resources.
A first SRS resource includes two ports, a second SRS resource includes four ports, and a third SRS resource includes two ports. The two ports included in the first SRS resource correspond to two of the four antennas in the first antenna set, the four ports included in the second SRS resource correspond to the four antennas in the second antenna set, and the two ports included in the third SRS resource correspond to the other two of the four antennas in the first antenna set.

**(5) 8 transmit 8 receive (8T8R)**

When the quantity of transmit antenna ports of the terminal device is 8 and the quantity of receive antenna ports is 8, the SRS resource set includes one SRS resource, and the SRS resource includes eight ports.
Four ports included in the SRS resource correspond to the four antennas in the first antenna set, and the other four ports included in the SRS resource correspond to the four antennas in the second antenna set.
In addition, when antennas corresponding to the eight ports included in the SRS resource are from both the first antenna set and the second antenna set, to distinguish the eight ports and further distinguish the antenna sets corresponding to the ports, the following four methods may be used:

① Ports used by the four antennas in the first antenna set to send the SRS and ports used by the four antennas in the second antenna set to send the SRS are distinguished by using combs (comb).
The SRS may occupy a plurality of symbols in a slot for repeated sending or frequency hopping sending on the plurality of symbols. The SRS sent on one OFDM symbol may be distributed on combs (comb) in frequency domain. Therefore, the two ports can be allocated resources in a comb manner, for further distinguishing.
② Ports used by the four antennas in the first antenna set to send the SRS and ports used by the four antennas in the second antenna set to send the SRS are distinguished by using cyclic shifts.
The SRS may occupy a plurality of symbols in a slot for repeated sending or frequency hopping sending on the plurality of symbols. A cyclic shift (cyclic shift, CS) may be separately added to the SRS sent on a same OFDM symbol in code domain. Therefore, the two ports can be allocated resources through cyclic shift addition, for further distinguishing.
③ Ports used by the four antennas in the first antenna set to send the SRS and ports used by the four antennas in the second antenna set to send the SRS are distinguished by using port indexes.
As described above, in two RFICs, one RFIC corresponds to the first virtual UE, and the other RFIC corresponds to the second virtual UE. Therefore, port identifiers may be set for two ports of the UE, and the two ports may be distinguished by using the port identifiers, to determine antenna sets corresponding to the ports.
④ Ports used by the four antennas in the first antenna set to send the SRS and ports used by the four antennas in the second antenna set to send the SRS are distinguished by using two adjacent symbols.
The SRS may occupy a plurality of symbols in a slot for repeated sending or frequency hopping sending on the plurality of symbols. A cyclic shift (cyclic shift, CS) may be separately added to the SRS sent on a same OFDM symbol in code domain. Therefore, the two ports can be allocated resources through cyclic shift addition, for further distinguishing.

It should be noted that in this embodiment of this application, the ports may be distinguished by using another method. This is not specifically limited herein.

After accessing the base station, the UE may report the quantity of transmit antenna ports and the quantity of receive antenna ports of the UE to the base station through signaling interaction between the base station and the UE. When sending a downlink signal to the UE, the base station may first read the quantity of transmit antenna ports and the quantity of receive antenna ports of the UE from a preset memory location. Therefore, based on the quantity of transmit antenna ports of the UE, the network device may determine, based on the configured SRS resource, the target antenna set to which the antenna corresponding to the port for receiving the SRS belongs, to perform precoding for downlink transmission.

Corresponding to step 504, the network device may determine, according to a same rule by which the terminal device sends the SRS through a port in an SRS resource, a set to which an antenna belongs. This embodiment of this application may include the following several cases:

(1) 1T8R

When the quantity of transmit antenna ports of the terminal device is 1 and the quantity of receive antenna ports is 8, the SRS resource set includes eight SRS resources, and each SRS resource includes one port.

One antenna corresponding to one port included in each of four SRS resources in the eight SRS resources belongs to the first antenna set, and one antenna corresponding to one port included in each of the other four SRS resources in the eight SRS resources belongs to the second antenna set.

(2) 2T8R

When the quantity of transmit antenna ports of the terminal device is 2 and the quantity of receive antenna ports is 8, the SRS resource set includes four SRS resources, and each SRS resource includes two ports.

Two antennas corresponding to two ports included in each of two SRS resources in the four SRS resources belong to the first antenna set, and two antennas corresponding to two ports included in each of the other two SRS resources in the four SRS resources belong to the second antenna set.

(3) 4T8R

When the quantity of transmit antenna ports of the terminal device is 4 and the quantity of receive antenna ports is 8, the SRS resource set includes two SRS resources, and each SRS resource includes four ports.

Four antennas corresponding to four ports included in one SRS resource in the two SRS resources belong to the first antenna set, and four antennas corresponding to four ports included the other SRS resource in the two SRS resources belong to the second antenna set.

(4) 6T8R

When the quantity of transmit antenna ports of the terminal device is 6 and the quantity of receive antenna ports is 8, the SRS resource set includes three SRS resources.

A first SRS resource includes two ports, a second SRS resource includes four ports, and a third SRS resource includes two ports.

Two antennas corresponding to the two ports included in the first SRS resource belong to the first antenna set, four antennas corresponding to the four ports included in the second SRS resource belong to the second antenna set, and two antennas corresponding to the two ports included in the third SRS resource belong to the first antenna set.

(5) 8T8R

When the quantity of transmit antenna ports of the terminal device is 8 and the quantity of receive antenna ports is 8, the SRS resource set includes one SRS resource, and the SRS resource includes eight ports.

Four antennas corresponding to four ports included in the SRS resource belong to the first antenna set, and four antennas corresponding to the other four ports included in the SRS resource belong to the second antenna set.

Similarly, when a plurality of antennas corresponding to a plurality of ports included in an SRS resource are from both the first antenna set and the second antenna set, to distinguish the eight ports and further distinguish the antenna sets corresponding to the ports, the following four methods may be used:

① Ports used by the four antennas in the first antenna set to send the SRS and ports used by the four antennas in the second antenna set to send the SRS are distinguished by using combs (comb).

② Ports used by the four antennas in the first antenna set to send the SRS and ports used by the four antennas in the second antenna set to send the SRS are distinguished by using cyclic shifts.

③ Ports used by the four antennas in the first antenna set to send the SRS and ports used by the four antennas in the second antenna set to send the SRS are distinguished by using port indexes.

④ Ports used by the four antennas in the first antenna set to send the SRS and ports used by the four antennas in the second antenna set to send the SRS are distinguished by using two adjacent symbols.

It should be noted that in this embodiment of this application, the ports may be distinguished by using another method. This is not specifically limited herein.

In a possible implementation, the network device sends a first downlink signal based on an antenna in the first antenna set. The network device sends a second downlink signal based on an antenna in the second antenna set.

Correspondingly, the UE receives the first downlink signal based on the antenna in the first antenna set. The first downlink signal is sent by the network device to the first antenna set. The UE receives the second downlink signal based on the antenna in the second antenna set. The second downlink signal is sent by the network device to the second antenna set.

The network device may perform channel estimation based on the SRS to obtain an uplink channel, and then obtain a downlink channel based on reciprocity between uplink and downlink channels. That the base station performs channel estimation based on an SRS may be understood as: The base station obtains uplink channel state information based on the SRS, and then obtains downlink channel state information. That the base station performs weight calculation based on the SRS may be understood as: The base station performs downlink precoding matrix calculation based on the received channel state information. After completing channel estimation and weight calculation, the base station can learn of a downlink precoding matrix, to perform downlink transmission.

The first downlink signal and the second downlink signal are different downlink signals. That is, the first downlink signal sent by the base station to the first antenna set is different from the second downlink signal sent by the base station to the second antenna set. After the 8R UE is split into two 4R UEs (virtual UEs), from a perspective of the base station, the terminal is still an 8R UE, and is only an 8R UE including two virtual 4R UEs. Each virtual 4R UE receives a part of data streams. If the base station transmits a total of eight streams of data to the 8R UE, each virtual 4R UE may receive four streams of data, and there is no intersection of data streams received by the two virtual 4R UEs. In this embodiment of this application, a downlink signal may include a physical downlink control channel (physical downlink control channel, PDCCH), a physical downlink shared channel (physical downlink shared channel, PDSCH), downlink control information (downlink control information, DCI), or the like. This is not specifically limited herein. In this way, the network device and the 8R UE can transmit a downlink signal based on the two split virtual UEs, so that each virtual UE separately receives and processes a signal, and a problem of high implementation difficulty and high computational complexity of the 8R UE can be resolved.

In a possible implementation, the network device may send a correspondence between a port for DMRS downlink transmission and a set identifier to the terminal device. The set identifier is an identifier of the first antenna set or an identifier of the second antenna set.

In a possible implementation, the SRS may be a precoded sounding reference signal precoded SRS. The UE may send the precoded SRS to the base station in the following several cases:

(1) 4 transmit 8 receive (4T8R)

When the quantity of transmit antenna ports of the terminal device is 4 and the quantity of receive antenna ports is 8, the SRS resource set includes two SRS resources.

A first SRS resource includes n1 ports, and a second SRS resource includes n2 ports.

Each of the n1 ports included in the first SRS resource corresponds to the four antennas in the first antenna set, and each of the n2 ports included in the second SRS resource corresponds to the four antennas in the second antenna set, where $n1 \leq 4$, $n2 \leq 4$, and both n1 and n2 are positive integers.

(2) 8 transmit 8 receive (8T8R)

When the quantity of transmit antenna ports of the terminal device is 8 and the quantity of receive antenna ports is 8, the SRS resource set includes one SRS resource, and the SRS resource includes n1+n2 ports.

Each of n1 ports included in the SRS resource corresponds to the four antennas in the first antenna set, and each of the other n2 ports included in the SRS resource corresponds to the four antennas in the second antenna set, where $n1 \leq 4$, $n2 \leq 4$, and both n1 and n2 are positive integers.

In addition, when antennas corresponding to a plurality of ports included in one SRS resource are from both the first antenna set and the second antenna set, to distinguish the plurality of ports and further distinguish the antenna sets corresponding to the ports, the following four methods may be used:

① Ports used by the four antennas in the first antenna set to send the SRS and ports used by the four antennas in the second antenna set to send the SRS are distinguished by using combs (comb).

② Ports used by the four antennas in the first antenna set to send the SRS and ports used by the four antennas in the second antenna set to send the SRS are distinguished by using cyclic shifts.

③ Ports used by the four antennas in the first antenna set to send the SRS and ports used by the four antennas in the second antenna set to send the SRS are distinguished by using port indexes.

④ Ports used by the four antennas in the first antenna set to send the SRS and ports used by the four antennas in the second antenna set to send the SRS are distinguished by using two adjacent symbols.

It should be noted that in this embodiment of this application, the ports may be distinguished by using another method. This is not specifically limited herein.

In a scenario in which the UE sends the precoded SRS, the UE may obtain a first precoder U and a second precoder U required for non-linear precoding, where the first precoder U corresponds to the first antenna set, and the second precoder U corresponds to the second antenna set; and send the first precoder U and the second precoder U to the network device.

In a possible implementation, the UE may first obtain precoding indication information. The precoding indication information indicates a precoding scheme of the network device. The UE sends the first precoder U and the second precoder U to the network device only when the precoding scheme of the network device is a non-linear precoding scheme.

In a case in which a port corresponds to a plurality of antennas (antenna switch exists), when a reference signal is sent on the port through the plurality of antennas, beamforming needs to be performed on the reference signal. A specific reason is that the port corresponds to a precoding vector. The precoding vector corresponds to a spatial direction, the precoding vector may also be referred to as a beamforming vector, and a function of the precoding vector is to perform beamforming on the reference signal. Specifically, a plurality of elements in the precoding vector correspond to the plurality of antennas, and the reference signal is multiplied by each element in the precoding vector, and is sent on a corresponding antenna, to implement beamforming on the reference signal. It can be learned from the foregoing that the SRS resources determined by the base station correspond to the plurality of antennas by configuring ports included in the SRS resources, to support beamforming on the SRS. Therefore, signal transmission quality can be improved, spatial multiplexing can be implemented, spectrum utilization can be improved, and SRS port resource overheads can be reduced.

The base station may send a CSI-RS to the terminal device. The CSI-RS is for calculating a precoding matrix, and the precoding matrix is used by the terminal device to precode a reference signal to obtain a precoded reference signal. That is, after receiving the CSI-RS, the terminal device calculates the precoding matrix based on the CSI-RS, sends the precoded SRS based on the precoding matrix obtained through calculation, and sends the precoded SRS to the base station.

In this embodiment of this application, the precoding matrix may be indicated by using a codebook structure that indicates the precoding matrix. The precoding matrix (denoted as U for short below) may be an M×N3 matrix, or the precoding matrix (denoted as U for short below) may be an N3×M matrix. M is a quantity of receive antennas of the terminal device, and N3 is a quantity of reference signal ports of the precoded SRS sent by the terminal device. The terminal device needs to report U.

To reduce feedback overheads of U, the UE may optimize U in at least one of the following manners:

1. Angles of all elements in each row of a first matrix representing the first precoder U are adjusted, so that a first column of the first matrix consists entirely of real numbers; and angles of all elements in each row of the second matrix representing the second precoder U are adjusted, so that a first column of the second matrix consists entirely of real numbers.

A precoding result of the network device is not affected when rows of U are rotated by a same angle, and a first column of U may be rotated to a real number. Because a feedback amount of a real number is less than that of a complex number, when a column of U is a real number, a feedback amount can be reduced.

2. A reporting order of each column of the first matrix representing the first precoder U or the second matrix representing the second precoder U is adjusted, so that an element with a largest modulus in the first matrix and the second matrix is located in the first column of the first matrix or the first column of the second matrix.

A column that includes the element with the largest modulus in U may be the foregoing column that consists of real numbers. For example, a column that consists of real numbers and that includes the element with the largest modulus is the first column.

3. Normalization is performed on the first matrix representing the first precoder U and the second matrix representing the second precoder U by using the element with the largest modulus.

The element with the largest modulus in the first column of U is normalized to a fixed value, and the element with the largest modulus does not need to be reported, but a location of the modulus with the largest modulus needs to be reported. After the element with the largest modulus is adjusted to the first column, only a row number needs to be reported, so that feedback overheads of U can be further reduced.

The first precoder U and the second precoder U have a same frequency domain granularity. The frequency domain granularity is a bandwidth that is set when the precoder U is obtained, that is, a bandwidth used for a same precoder U.

According to a second aspect, this application provides an SRS transmission apparatus, used in a terminal device. The terminal device includes eight receive antennas. The apparatus includes: an obtaining module, configured to obtain a channel sounding reference signal SRS resource set, where the SRS resource set includes a plurality of SRS resources, and each SRS resource includes at least one port; a processing module, configured to: determine a first antenna set and a second antenna set, where the first antenna set and the second antenna set respectively include M antennas and 8-M antennas in the eight receive antennas, and M is a positive integer; and determine an antenna corresponding to the at least one port included in each of the plurality of SRS resources, where at least one antenna corresponding to the at least one port included in each SRS resource belongs to the first antenna set or the second antenna set; and a sending module, configured to: separately send an SRS for measuring an uplink channel of the corresponding antenna to a base station through the at least one port included in each SRS resource.

In a possible implementation, the processing module is specifically configured to divide the eight receive antennas into two groups according to a preset rule, to obtain the first antenna set and the second antenna set.

In a possible implementation, the processing module is specifically configured to: receive a channel state information reference signal CSI-RS sent by the network device; and divide the eight receive antennas into two groups based on the CSI-RS, to obtain the first antenna set and the second antenna set.

In a possible implementation, the sending module is further configured to send first grouping information to the network device. The first grouping information indicates SRS resources respectively corresponding to the first antenna set and the second antenna set.

In a possible implementation, when a quantity of transmit antenna ports of the terminal device is 1 and a quantity of receive antenna ports is 8, the SRS resource set includes eight SRS resources, and each SRS resource includes one port.

One port included in each of four SRS resources in the eight SRS resources corresponds to one of four antennas in the first antenna set, one port included in each of the other four SRS resources in the eight SRS resources corresponds to one of four antennas in the second antenna set, and there is no intersection of the antennas corresponding to the different ports.

In a possible implementation, when the quantity of transmit antenna ports of the terminal device is 2 and the quantity of receive antenna ports is 8, the SRS resource set includes four SRS resources, and each SRS resource includes two ports.

Two ports included in each of two SRS resources in the four SRS resources correspond to two of the four antennas in the first antenna set, two ports included in each of the other two SRS resources in the four SRS resources correspond to two of the four antennas in the second antenna set, and there is no intersection of the antennas corresponding to the different ports.

In a possible implementation, when the quantity of transmit antenna ports of the terminal device is 4 and the quantity of receive antenna ports is 8, the SRS resource set includes two SRS resources, and each SRS resource includes four ports.

Four ports included in one SRS resource in the two SRS resources correspond to the four antennas in the first antenna set, four ports included in the other SRS resource in the two SRS resources correspond to the four antennas in the second antenna set, and there is no intersection of the antennas corresponding to the different ports.

In a possible implementation, when the quantity of transmit antenna ports of the terminal device is 6 and the quantity of receive antenna ports is 8, the SRS resource set includes three SRS resources.

A first SRS resource includes two ports, a second SRS resource includes four ports, and a third SRS resource includes two ports.

The two ports included in the first SRS resource correspond to two of the four antennas in the first antenna set, the four ports included in the second SRS resource correspond to the four antennas in the second antenna set, the two ports included in the third SRS resource correspond to the other two of the four antennas in the first antenna set, and there is no intersection of the antennas corresponding to the different ports.

In a possible implementation, when the quantity of transmit antenna ports of the terminal device is 8 and the quantity of receive antenna ports is 8, the SRS resource set includes one SRS resource, and the SRS resource includes eight ports.

Four ports included in the SRS resource correspond to the four antennas in the first antenna set, the other four ports included in the SRS resource correspond to the four antennas in the second antenna set, and there is no intersection of the antennas corresponding to the different ports.

In a possible implementation, the SRS is a precoded sounding reference signal precoded SRS.

In a possible implementation, when the quantity of transmit antenna ports of the terminal device is 4 and the quantity of receive antenna ports is 8, the SRS resource set includes two SRS resources.

A first SRS resource includes n1 ports, and a second SRS resource includes n2 ports.

Each of the n1 ports included in the first SRS resource corresponds to the four antennas in the first antenna set, and each of the n2 ports included in the second SRS resource corresponds to the four antennas in the second antenna set, where n1≤4, and n2≤4.

In a possible implementation, when the quantity of transmit antenna ports of the terminal device is 8 and the quantity of receive antenna ports is 8, the SRS resource set includes one SRS resource, and the SRS resource includes n1+n2 ports.

Each of n1 ports included in the SRS resource corresponds to the four antennas in the first antenna set, and each of the other n2 ports included in the SRS resource corresponds to the four antennas in the second antenna set, where n1≤4, and n2≤4.

In a possible implementation, a port used by an antenna in the first antenna set to send an SRS and a port used by an antenna in the second antenna set to send an SRS are distinguished by using combs; a port used by an antenna in the first antenna set to send an SRS and a port used by an antenna in the second antenna set to send an SRS are distinguished by using cyclic shifts; a port used by an antenna in the first antenna set to send an SRS and a port used by an antenna in the second antenna set to send an SRS are distinguished by using port indexes; or a port used by an antenna in the first antenna set to send an SRS and a port used by an antenna in the second antenna set to send an SRS are distinguished by using two adjacent symbols.

In a possible implementation, the obtaining module is further configured to obtain a first precoder U and a second precoder U. The first precoder U corresponds to the first antenna set, and the second precoder U corresponds to the second antenna set. The sending module is further configured to send the first precoder U and the second precoder U to the network device.

In a possible implementation, the obtaining module is further configured to obtain precoding indication information. The precoding indication information indicates a precoding scheme of the network device. The sending module is specifically configured to: when the precoding scheme of the network device is a non-linear precoding scheme, send the first precoder U and the second precoder U to the network device.

In a possible implementation, the first precoder U and the second precoder U have a same frequency domain granularity.

In a possible implementation, the obtaining module is specifically configured to: obtain a downlink channel based on the received CSI-RS; and obtain the first precoder U and the second precoder U based on the downlink channel.

In a possible implementation, a first column of a first matrix of the first precoder U consists entirely of real numbers, and a first column of a second matrix of the second precoder U consists entirely of real numbers.

In a possible implementation, an element with a largest modulus included in the first matrix of the first precoder U and the second matrix of the second precoder U is located in the first column of the first matrix or the first column of the second matrix.

In a possible implementation, the first matrix of the first precoder U and the second matrix of the second precoder U are separately obtained through normalization based on the element with the largest modulus.

According to a third aspect, this application provides an SRS transmission apparatus, used in a network device. The apparatus includes: a sending module, configured to send configuration information of a channel sounding reference signal SRS resource set to a terminal device, where the SRS resource set includes a plurality of SRS resources, each SRS resource includes at least one port, the terminal device includes eight receive antennas, and M antennas and 8-M antennas in the eight receive antennas respectively belong to a first antenna set and a second antenna set; a receiving module, configured to separately receive, through the at least one port included in each of the plurality of SRS resources, an SRS sent by the terminal device, where the SRS is for measuring an uplink channel of an antenna corresponding to the port in the SRS resource; and a processing module, configured to determine, based on the SRS resource, a target antenna set to which the antenna corresponding to the port in the SRS resource belongs, where the target antenna set is the first antenna set or the second antenna set.

In a possible implementation, the processing module is further configured to obtain, based on the SRS resource, a downlink channel of the antenna corresponding to the port in the SRS resource.

In a possible implementation, the sending module is further configured to send a correspondence between a port for DMRS downlink transmission and a set identifier to the terminal device. The set identifier is an identifier of the first antenna set or an identifier of the second antenna set.

In a possible implementation, the processing module is further configured to divide the eight receive antennas into two groups, to obtain the first antenna set and the second antenna set. The sending module is further configured to send second grouping information to the terminal device. The second grouping information indicates the first antenna set and the second antenna set.

In a possible implementation, when a quantity of transmit antenna ports of the terminal device is 1 and a quantity of receive antenna ports is 8, the SRS resource set includes eight SRS resources, and each SRS resource includes one port.

One antenna corresponding to one port included in each of four SRS resources in the eight SRS resources belongs to the first antenna set, one antenna corresponding to one port included in each of the other four SRS resources in the eight SRS resources belongs to the second antenna set, and there is no intersection of the antennas corresponding to the different ports.

In a possible implementation, when the quantity of transmit antenna ports of the terminal device is 2 and the quantity of receive antenna ports is 8, the SRS resource set includes four SRS resources, and each SRS resource includes two ports.

Two antennas corresponding to two ports included in each of two SRS resources in the four SRS resources belong to the first antenna set, two antennas corresponding to two ports included in each of the other two SRS resources in the four SRS resources belong to the second antenna set, and there is no intersection of the antennas corresponding to the different ports.

In a possible implementation, when the quantity of transmit antenna ports of the terminal device is 4 and the quantity of receive antenna ports is 8, the SRS resource set includes two SRS resources, and each SRS resource includes four ports.

Four antennas corresponding to four ports included in one SRS resource in the two SRS resources belong to the first antenna set, four antennas corresponding to four ports included in the other SRS resource in the two SRS resources belong to the second antenna set, and there is no intersection of the antennas corresponding to the different ports.

In a possible implementation, when the quantity of transmit antenna ports of the terminal device is 6 and the quantity of receive antenna ports is 8, the SRS resource set includes three SRS resources.

A first SRS resource includes two ports, a second SRS resource includes four ports, and a third SRS resource includes two ports.

Two antennas corresponding to the two ports included in the first SRS resource belong to the first antenna set, four antennas corresponding to the four ports included in the second SRS resource belong to the second antenna set, two antennas corresponding to the two ports included in the third SRS resource belong to the first antenna set, and there is no intersection of the antennas corresponding to the different ports.

In a possible implementation, when the quantity of transmit antenna ports of the terminal device is 8 and the quantity of receive antenna ports is 8, the SRS resource set includes one SRS resource, and the SRS resource includes eight ports.

Four antennas corresponding to four ports included in the SRS resource belong to the first antenna set, four antennas corresponding to the other four ports included in the SRS resource belong to the second antenna set, and there is no intersection of the antennas corresponding to the different ports.

In a possible implementation, the SRS is a precoded sounding reference signal precoded SRS.

In a possible implementation, when the quantity of transmit antenna ports of the terminal device is 4 and the quantity of receive antenna ports is 8, the SRS resource set includes two SRS resources.

A first SRS resource includes n1 ports, and a second SRS resource includes n2 ports.

Four antennas corresponding to each of the n1 ports included in the first SRS resource belong to the first antenna set, and four antennas corresponding to each of the n2 ports included in the second SRS resource belong to the second antenna set, where n1≤4, and n2≤4.

In a possible implementation, when the quantity of transmit antenna ports of the terminal device is 8 and the quantity of receive antenna ports is 8, the SRS resource set includes one SRS resource, and the SRS resource includes n1+n2 ports.

Four antennas corresponding to each of the n1 ports included in the SRS resource belong to the first antenna set, and four antennas corresponding to each of the other n2 ports included in the SRS resource belong to the second antenna set, where n1≤4, and n2≤4.

In a possible implementation, a port used by an antenna in the first antenna set to send an SRS and a port used by an antenna in the second antenna set to send an SRS are distinguished by using combs; a port used by an antenna in the first antenna set to send an SRS and a port used by an antenna in the second antenna set to send an SRS are distinguished by using cyclic shifts; a port used by an antenna in the first antenna set to send an SRS and a port used by an antenna in the second antenna set to send an SRS are distinguished by using port indexes; or a port used by an antenna in the first antenna set to send an SRS and a port used by an antenna in the second antenna set to send an SRS are distinguished by using two adjacent symbols.

According to a fourth aspect, this application provides a terminal device, including: one or more processors; and a memory, configured to store one or more programs. When the one or more programs are executed by the one or more processors, the one or more processors are enabled to implement the method according to any one of the possible implementations of the first aspect.

According to a fifth aspect, this application provides a network device, including: one or more processors; and a memory, configured to store one or more programs. When the one or more programs are executed by the one or more processors, the one or more processors are enabled to implement the method according to any one of the possible implementations of the second aspect.

According to a sixth aspect, this application provides a computer-readable storage medium, including a computer program. When the computer program is executed on a computer, the computer is enabled to perform the method according to any one of the first aspect and the second aspect.

According to a seventh aspect, this application provides a computer program. When the computer program is executed by a computer, the computer is configured to perform the method according to any one of the first aspect and the second aspect.

BRIEF DESCRIPTION OF DRAWINGS

FIG. 1 is a diagram of a communication system;
FIG. 2 is a diagram of an example structure of a network device according to an embodiment of this application;
FIG. 3 is a diagram of an example structure of a terminal device according to an embodiment of this application;
FIG. 4 is a diagram of splitting an 8R UE into two virtual UEs;

FIG. 5 is a flowchart of a process 500 of an SRS transmission method according to an embodiment of this application;

FIG. 6 is a diagram of a structure of an SRS transmission apparatus 600 in a terminal device according to this application; and

FIG. 7 is a diagram of a structure of an SRS transmission apparatus 700 in a network device according to this application.

## DESCRIPTION OF EMBODIMENTS

To make objectives, technical solutions, and advantages of this application clearer, the following clearly and completely describes the technical solutions in this application with reference to the accompanying drawings in this application. It is clear that the described embodiments are merely some rather than all of embodiments of this application. All other embodiments obtained by a person of ordinary skill in the art based on embodiments of this application without creative efforts shall fall within the protection scope of this application.

In embodiments of this specification, claims, and accompanying drawings of this application, the terms "first", "second", "$i^{th}$ (i is a positive integer)", and the like are merely intended for a purpose of differentiated description, and shall not be understood as an indication or implication of relative importance or an indication or implication of a sequence. In addition, the terms "include", "have", and any variant thereof are intended to cover non-exclusive inclusion, for example, include a series of steps or units. For example, a method, system, product, or device is not necessarily limited to those steps or units expressly listed, but may include other steps or units not expressly listed or inherent to such a process, method, product, or device.

It should be understood that in this application, "at least one (item)" means one or more, and "a plurality of" means two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

For ease of understanding of embodiments of this application, several basic concepts in embodiments of this application are briefly described. It should be understood that basic concepts described below are briefly described by using a basic concept specified in an NR protocol as an example, but embodiments of this application are not limited to being applied only to an NR system. Therefore, standard names appearing when the NR system is used as an example for description are all functional descriptions, and specific names are not limited, indicate only functions of a device, and may be correspondingly extended to another system, for example, a 2G, 3G, 4G, or future communication system.

1. Precoding technology

When a channel state is known, a terminal device may process a to-be-sent signal by using a precoding matrix that matches the channel state, so that a precoded to-be-sent signal adapts to a channel, to improve received signal strength of a receiving device, and reduce interference to another receiving device. Therefore, received signal quality (for example, a signal to interference plus noise ratio (signal to interference plus noise ratio, SINR)) is improved through precoding on the to-be-sent signal.

It should be understood that related descriptions of the precoding technology in this application are merely examples for ease of understanding, and are not intended to limit the protection scope of embodiments of this application. In a specific implementation process, the sending device may alternatively perform precoding in another manner. For example, when channel information (for example, but not limited to a channel matrix) cannot be obtained, precoding is performed by using a preset precoding matrix or by using weighted processing. For brevity, specific content of the precoding technology is not described in this application.

2. Precoding matrix

The precoding matrix may be, for example, a precoding matrix determined by a terminal device based on a channel matrix of each frequency domain unit. The precoding matrix may be determined by the terminal device through channel estimation or the like or based on channel reciprocity. However, it should be understood that a specific method of determining the precoding matrix by the terminal device is not limited to the foregoing descriptions. For specific implementations, refer to a conventional technology. For brevity, implementations are not enumerated herein.

For example, the precoding matrix may be obtained by performing singular value decomposition (singular value decomposition, SVD) on the channel matrix or a covariance matrix of the channel matrix, or may be obtained by performing eigenvalue decomposition (eigenvalue decomposition, EVD) on the covariance matrix of the channel matrix. It should be understood that the foregoing listed manners of determining the precoding matrix are merely examples, and should not constitute any limitation on this application. For a manner of determining the precoding matrix, refer to a conventional technology. For brevity, the manners are not listed one by one herein.

3. Channel reciprocity

In a time division duplex (time division duplex, TDD) mode, on uplink and downlink channels, signals are transmitted on a same frequency domain resource and different time domain resources. Within a short period of time (for example, coherence time of channel propagation), it may be considered that channels through which signals on the uplink and downlink channels pass are the same, and the uplink and downlink channels may be obtained equivalently. This is reciprocity between the uplink and downlink channels. Based on the reciprocity between the uplink and downlink channels, a network device may measure the uplink channel based on an uplink reference signal, for example, a sounding reference signal (sounding reference signal, SRS). In addition, the downlink channel may be estimated based on the uplink channel, so that a precoding matrix used for downlink transmission can be determined.

4. Reference signal port

The reference signal port is a resource granularity occupied by a terminal device to send a reference signal.

In a possible implementation, one reference signal port may correspond to one transmit antenna of the terminal device. In this implementation, a quantity of reference signal ports of the terminal device may be a quantity of transmit antennas of the terminal device.

In another possible implementation, one reference signal port may correspond to one precoding vector of a transmit antenna, that is, may correspond to one spatial beamforming direction. In this implementation, a quantity of reference signal ports of the terminal device may be less than a quantity of transmit antennas of the terminal device.

Generally, a plurality of reference signals corresponding to a plurality of reference signal ports on one reference signal resource occupy one or more time-frequency resources, and the plurality of reference signals that occupy a same time-frequency resource are code division multiplexed. For example, reference signals of different reference signal ports use different cyclic shifts (cyclic shift, CS) to occupy a same time-frequency resource.

Specifically, on the same time-frequency resource, the different reference signals of the different reference signal ports can avoid mutual interference in an orthogonal manner of code division multiplexing, and the orthogonal manner may be implemented by using cyclic shifts. When a delay spread of a channel is small, code division orthogonality can be essentially implemented by using CSs. A receiving end may perform a specific operation, to cancel a signal using another CS and reserve only a signal using a specific CS, to implement code division multiplexing.

In embodiments of this application, the reference signal port may be an SRS port.

5. Reference signal (reference signal, RS)

The RS may also be referred to as a pilot (pilot), a reference sequence, or the like. In embodiments of this application, the reference signal may be a reference signal for channel measurement. For example, the reference signal may be a channel state information reference signal (channel state information reference signal, CSI-RS) used for downlink channel measurement, or may be a sounding reference signal (sounding reference signal, SRS) used for uplink channel measurement.

It should be understood that the foregoing listed reference signals are merely examples, and should not constitute any limitation on this application. This application does not exclude a possibility that another reference signal is defined in a future protocol to implement a same or similar function, and does not exclude a possibility that another reference signal is defined in a future protocol to implement different functions.

In embodiments of this application, the reference signal may be an SRS or a CSI-RS.

6. SRS

The SRS is a reference signal sent by a terminal device.

A new radio (new radio, NR) access technology system may support a base station to obtain uplink (Uplink, UL) channel information by using the SRS. A time division duplex (time division duplex, TDD) system may further support a base station to obtain downlink (Downlink, DL) channel information by measuring the SRS by using channel reciprocity. In this way, the base station can obtain the UL and DL channel information by using the SRS.

Each SRS resource may include $N_{\mathrm{ap}}^{\mathrm{SRS}} \in \{1,2,4,8\}$ SRS ports. An existing standard and protocol only support each SRS resource to include a maximum of four SRS ports. A case in which an SRS resource includes eight SRS ports is designed in embodiments of this application. Each SRS port corresponds to one physical antenna or one virtual antenna of a UE, and each SRS port corresponds to a specific time-frequency-code resource. In an ideal case, time-frequency-code resources corresponding to the SRS ports are orthogonal.

It should be understood that different antenna ports included in one SRS resource may occupy completely same symbols, and are multiplexed through frequency division (occupying different subcarriers) or code division (using different ZC sequences or different cyclic shifts of a same sequence). There is a correspondence between a reference signal resource and a reference signal. For the correspondence, refer to descriptions in an existing standard. Further, in some scenarios, the reference signal resource and the reference signal may be equivalent.

For example, the SRS in embodiments of this application includes any one of the following types: a periodic sounding reference signal SRS, a semi-periodic SRS, or an aperiodic SRS. Details are as follows:
Periodic SRS: The SRS is sent periodically.

Semi-periodic SRS: A network device sends a start instruction (for example, a start instruction sent by using a MAC CE) that indicates an SRS sending start moment, and the network device sends an end instruction (for example, an end instruction sent by using a MAC CE) that indicates an SRS sending end moment. The SRS is periodically sent between the SRS sending start moment and the SRS sending end moment.

Aperiodic SRS: The network device indicates the terminal device (for example, by using DCI) to send the SRS in a time unit (for example, a slot or a subframe).

Further, for the periodic SRS, the semi-periodic SRS, or the aperiodic SRS, a quantity N1 of ports and sending resources of N1 ports in a slot need to be configured for one SRS resource.

For example, the SRS occupies a plurality of symbols in the slot for repeated sending or frequency hopping sending on the plurality of symbols. In one OFDM symbol, the SRS may be distributed on C1 combs (comb) in frequency domain. Further, one comb may be split into C2 cyclic shifts (cyclic shift, CS) in a delay domain (which may be understood as: one OFDM symbol may be split into C1*C2 port resources). N1 ports in one SRS resource are sent on N1 of C1*C2 port resources of the OFDM symbol.

Further, for the periodic SRS and the semi-periodic SRS, an SRS periodicity and a time offset need to be configured for one SRS resource.

For example, the sounding periodicity is a time interval between two adjacent times of SRS sending, and may be absolute time, for example, T ms (T is a positive integer); or may be a quantity of slots, for example, T slots (T is a positive integer).

The time offset may be absolute time, for example, T ms (T is a positive integer); or may be a quantity of slots, for example, T slots (T is a positive integer).

For another example, a slot in which another SRS may be sent is obtained based on the SRS periodicity, the time offset, and a modulo operation.

In addition, for the aperiodic SRS, a time offset of SRS sending time (a slot for SRS sending) relative to reference time (for example, a slot indicated by DCI) needs to be configured.

For example, the time offset may be absolute time, for example, T ms (T is a positive integer); or may be a quantity of slots, for example, T slots (T is a positive integer).

For another example, calculation of the time offset may include a slot for marking the reference time and the slot for SRS sending, or may not include the slot for marking the reference time and the slot for SRS sending.

The existing standard defines several types of transmission supported by the SRS: codebook (codebook, CB)-based SRS transmission, non-codebook (non-codebook, NCB)-based SRS transmission, and antenna switch (antenna switch, AS) SRS transmission.

Currently, the standard only defines how a non-codebook SRS for uplink transmission supports beamforming for the SRS, which is referred to as a precoded sounding reference signal (precoded SRS), and does not define how a codebook SRS for uplink transmission and an antenna switch SRS for downlink transmission support the precoded SRS.

Because the NCB-based SRS transmission is for uplink transmission, the terminal device sends an SRS through some antennas to measure an uplink channel, and sends a physical uplink channel (for example, a physical uplink control channel (physical uplink control channel, PUCCH) or a physical uplink shared channel (physical uplink share channel, PUSCH)) through the antennas. In other words, an antenna measured by using the SRS does not need to be restricted by a standard. However, for downlink transmission, a network device side needs to know antennas of the terminal device that are measured by using a received SRS.

The precoded reference signal may be a reference signal obtained by precoding a reference signal. Precoding may specifically include beamforming (beamforming) and/or phase rotation. Beamforming may be implemented, for example, by precoding an SRS based on one or more angle vectors, and phase rotation may be implemented, for example, by precoding an SRS based on one or more delay vectors.

In embodiments of this application, for ease of differentiation and description, a reference signal obtained through precoding, for example, beamforming and/or phase rotation, is referred to as a precoded reference signal, and a reference signal that is not precoded is referred to as a reference signal for short.

In embodiments of this application, precoding the SRS based on the one or more angle vectors may also be referred to as loading the one or more angle vectors to the SRS, to implement beamforming. Precoding the SRS based on the one or more delay vectors may also be referred to as loading the one or more delay vectors to the SRS number, to implement phase rotation.

7. Reference signal resource

The reference signal resource may be used to configure transmission attributes of a reference signal, for example, a time-frequency resource position, a port mapping relationship, a power factor, and a scrambling code. For details, refer to the conventional technology. A transmit-end device may send the reference signal based on the reference signal resource, and a receive-end device may receive the reference signal based on the reference signal resource. One reference signal resource may include one or more RBs.

In embodiments of this application, the reference signal resource may be, for example, an SRS resource.

8. Antenna switch

Embodiments of this application relate to an antenna switch scenario and a non-antenna switch scenario. The antenna switch scenario indicates that a quantity of transmit antennas of a terminal device is less than a quantity of receive antennas, and the non-antenna switch scenario indicates that a quantity of transmit antennas of the terminal device is equal to a quantity of receive antennas.

For example, a quantity of antennas of the terminal device is represented as NTMR, where N represents a quantity of transmit antennas, T represents transmit (transmit, T), M represents a quantity of receive antennas, and R represents receive (receive, R).

If N is less than M, the terminal device is understood as a terminal device in the antenna switch scenario, and this means that antenna switch needs to be performed in a procedure in which the terminal device sends an SRS.

If N is equal to M, the terminal device is understood as a terminal device in the non-antenna switch scenario, and this means that antenna switch does not need to be performed in a procedure in which the terminal device sends an SRS.

The foregoing antenna switch may alternatively be referred to as antenna selection. This is not limited in this application.

9. Antenna transmission and reception capability of a user equipment (user equipment, UE)

In an NR system, due to limitations of costs and hardware, a quantity of antennas of a UE for simultaneously transmitting may be less than a quantity of antennas for simultaneously receiving. Consequently, different UEs have different antenna transmission and reception capabilities. To enable the UE with transmit antennas less than receive antennas to obtain downlink channel information by using channel reciprocity, a transmit antenna switch manner for an SRS is designed in an NR system.

Currently, an antenna transmission and reception capability of an 8R UE (a UE with eight antennas) include 1 transmit 8 receive (1T8R), 2 transmit 8 receive (2T8R), and 4 transmit 8 receive (4T8R). For different antenna transmission and reception capabilities, a base station may configure, for the UE in the following manner, an SRS resource set (which may also be referred to as an SRS resource set for antenna switch) for obtaining downlink channel state information (channel state information, CSI).

(1) 1 transmit 8 receive (1T8R)

A. A maximum of two periodic SRS resource sets or semi-persistent SRS resource sets are configured. One SRS resource set includes eight SRS resources sent on different orthogonal frequency division multiplexing (orthogonal frequency division multiplexing, OFDM) symbols, each SRS resource includes one antenna port, and the UE sends different SRS resources through different antenna ports. This configuration is mainly for a UE having a 1T8R capability. Because the UE has only one transmit radio frequency channel, the UE needs to send different SRS resources through antenna switch.

B. A maximum of four aperiodic SRS resource sets are configured. When two aperiodic SRS resource sets are configured, the two SRS resource sets include eight SRS resources in total, and the eight SRS resources are sent in two slots. When three aperiodic SRS resource sets are configured, the three SRS resource sets include eight SRS resources in total, and the eight SRS resources are sent in three slots. When four aperiodic SRS resource sets are configured, the four SRS resource sets include eight SRS resources in total, and the eight SRS resources are sent in four slots. Each SRS resource includes one antenna port, and the UE sends different SRS resources through different antenna ports. This configuration is mainly for a UE having a 1T8R capability. Because the UE has only one transmit radio frequency channel, the UE needs to send different SRS resources through antenna switch.

(2) 2 transmit 8 receive (2T8R)

A. A maximum of one periodic SRS resource set or two semi-persistent SRS resource sets are configured. One SRS resource set includes four SRS resources sent on different OFDM symbols, and each SRS resource includes two antenna ports. The UE sends different SRS resources through different antenna ports. This configuration is mainly for a UE having a 2T8R capability. Because the UE has only two transmit radio frequency channels, the UE needs to send different SRS resources through antenna switch.

B. A maximum of four aperiodic SRS resource sets are configured. When one aperiodic SRS resource set is configured, the SRS resource set includes four SRS resources sent on different OFDM symbols, each SRS resource includes two antenna ports, and the UE sends different SRS resources through different antenna ports. When two aperiodic SRS resource sets are configured, the two resource sets include four SRS resources in total, and the four SRS resources are sent in two slots. When three aperiodic SRS resource sets are configured, the three resource sets include four SRS resources in total.

Two SRS resource sets each include one SRS resource, one SRS resource set includes two SRS resources, and the four SRS resources are sent in three slots. When four aperiodic SRS resource sets are configured, each SRS resource set includes one SRS resource, and the four SRS resources are sent in four slots. Each SRS resource includes two antenna ports, and the UE sends different SRS resources through different antenna ports. This configuration is mainly for a UE having a 2T8R capability. Because the UE has only two transmit radio frequency channels, the UE needs to send different SRS resources through antenna switch.

(3) 4 transmit 8 receive (4T8R)

A. A maximum of two periodic SRS resource sets or semi-persistent SRS resource sets are configured. One SRS resource set includes two SRS resources sent on different OFDM symbols, and each SRS resource includes four antenna ports. The UE sends different SRS resources through different antenna ports. This configuration is mainly for a UE having a 4T8R capability. Because the UE has only four transmit radio frequency channels, the UE needs to send different SRS resources through antenna switch.

B. A maximum of two aperiodic SRS resource sets are configured. When one aperiodic SRS resource set is configured, the SRS resource set includes two SRS resources sent on different OFDM symbols. Each SRS resource includes four antenna ports, and the UE sends different SRS resources through different antenna ports. When two aperiodic SRS resource sets are configured, the two resource sets include two SRS resources in total, and the two SRS resources are sent in two slots. Each SRS resource includes four antenna ports, and different SRS resources are sent through different antenna ports. This configuration is mainly for a UE having a 4T8R capability. Because the UE has only four transmit radio frequency channels, the UE needs to send different SRS resources through antenna switch.

(4) 6 transmit 8 receive (6T8R)

A. A maximum of two periodic or semi-persistent SRS resource sets are configured. One SRS resource set includes three SRS resources sent on different OFDM symbols, and the three SRS resources include two, four, and two antenna ports respectively. The UE sends different SRS resources through different antenna ports. This configuration is mainly for a UE having a 6T8R capability. Because the UE has only six transmit radio frequency channels, the UE needs to send different SRS resources through antenna switch.

B. A maximum of two aperiodic SRS resource sets are configured. When one aperiodic SRS resource set is configured, the SRS resource set includes three SRS resources sent on different OFDM symbols, the three SRS resources include two, four, and two antenna ports respectively, and the UE sends different SRS resources through different antenna ports. When two aperiodic SRS resource sets are configured, the two resource sets include three SRS resources in total, and the three SRS resources are sent in three slots. One SRS resource includes two or four antenna ports, and different SRS resources are sent through different antenna ports. This configuration is mainly for a UE having a 6T8R capability. Because the UE has only six transmit radio frequency channels, the UE needs to send different SRS resources through antenna switch.

(5) 8 transmit 8 receive (8T8R)

One periodic, semi-persistent, or aperiodic SRS resource set is configured. The SRS resource set includes one SRS resource sent on a same OFDM symbol, and the SRS resource includes eight antenna ports. The UE sends the SRS resource through all the antenna ports. This configuration is mainly for a UE having an 8T8R capability.

It takes some time for the UE to perform antenna (transmit radio frequency channel) switch. In an antenna switch process of the UE, no uplink signal can be sent. That is, a guard interval for antenna switch needs to be configured for the UE. Table 1 lists minimum switching time requirements for different subcarrier spacings. To support the UE to send an SRS in an antenna switch manner, when configuring, for the UE, an SRS resource set supporting antenna switch, the base station needs to reserve a sufficient time interval between two SRS resources according to a requirement in Table 1.

Table 1

| $\mu$ | $\Delta f = 2^{\mu} \cdot 15$ [kHz] | $Y$ [symbol] |
|---|---|---|
| 0 | 15 | 1 |
| 1 | 30 | 1 |
| 2 | 60 | 1 |
| 3 | 120 | 2 |

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5th generation (5th generation, 5G) system, a new radio (new radio, NR) system, or a future network. The 5G mobile communication system in embodiments of this application includes a non-standalone (non-standalone, NSA) 5G mobile communication system or a standalone (standalone, SA) 5G mobile communication system. The technical solutions provided in embodiments of this application may be further applied to a future communication system, for example, a 6th generation mobile communication system. Alternatively, the communication system may be a public land mobile network (public land mobile network, PLMN), a device-to-device (device-to-device, D2D) communication system, a machine-to-machine (machine-to-machine, M2M) communication system, an internet of things (internet of Things, IoT) communication system, or another communication system.

A terminal device (terminal equipment) in embodiments of this application may be an access terminal, a subscriber unit, a subscriber station, a mobile station, a relay station, a remote station, a remote terminal, a mobile device, a user terminal (user terminal), a user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile communication network (public land mobile network, PLMN), a terminal device in a future internet of vehicles, or the like. This is not limited in embodiments of this application.

As an example rather than a limitation, in embodiments of this application, the wearable device may also be referred to as a wearable intelligent device, and is a general name of a wearable device developed by intelligently designing daily wear through a wearable technology, such as glasses, gloves, watches, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that are dedicated to only one type of application function and need to work with other devices such as smartphones, such as various smart bands or smart jewelry for monitoring physical signs.

In addition, the terminal device in embodiments of this application may alternatively be a terminal device in an IoT system. An IoT is an important part of future development of information technologies. A main technical feature of the IoT is connecting a thing to a network through a communication technology, to implement an intelligent network for interconnection between a person and a machine or between one thing and another. In embodiments of this application, the IoT technology may implement massive connections, deep coverage, and terminal power saving by using, for example, a narrowband (narrowband, NB) technology.

In addition, in embodiments of this application, the terminal device may further include a sensor such as an intelligent printer, a train detector, and a gas station. Main functions of the terminal device include collecting data (some terminal devices), receiving control information and downlink data of a network device, sending an electromagnetic wave, and transmitting uplink data to the network device.

The network device in embodiments of this application may be any communication device that has a wireless transceiver function and that is configured to communicate with the terminal device. The device includes but is not limited to an evolved NodeB (evolved NodeB, eNB), a radio network controller (radio network controller, RNC), a NodeB (NodeB, NB), a home base station (home evolved NodeB, HeNB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission and reception point, TRP), a 5G system, for example, a gNB in an NR system, or a transmission point (TRP or TP), one or a group of antenna panels (including a plurality of antenna panels) of a base station in a 5G system, or a network node that constitutes a gNB or a transmission point, for example, a baseband unit (BBU) or a distributed unit (distributed unit, DU).

In some deployments, the network device in embodiments of this application may be a central unit (central unit, CU) or a distributed unit (distributed unit, DU), or the network device includes a CU or a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

Further, the CU may be divided into a control plane central unit (CU-CP) and a user plane central unit (CU-UP). The CU-CP and the CU-UP may also be deployed on different physical devices. The CU-CP is responsible for a control plane function, and mainly includes the RRC layer and a PDCP-C layer. The PDCP-C layer is mainly responsible for data encryption and decryption, integrity protection, data transmission, and the like on a control plane. The CU-UP is responsible for a user plane function, and mainly includes an SDAP layer and a PDCP-U layer. The SDAP layer is mainly responsible for processing data of a core network and mapping a flow (flow) to a bearer. The PDCP-U layer is mainly responsible for at least one function of encryption and decryption, integrity protection, header compression, serial number maintenance, data transmission, and the like on a data plane. Specifically, the CU-CP and the CU-UP are connected through a communication interface (for example, an E1 interface). The CU-CP represents the network device and is connected to a core network device through a communication interface (for example, an Ng interface), and is connected to the DU through a communication interface (for example, an F1-C (control plane) interface). The CU-UP is connected to the DU through a communication interface (for example, an F1-U (user plane) interface).

In another possible implementation, the PDCP-C layer is also included in the CU-UP.

It may be understood that the foregoing protocol layer division between the CU and the DU, and protocol layer division between the CU-CP and the CU-UP are merely examples, and there may be another division manner. This is not limited in embodiments of this application.

The network device mentioned in embodiments of this application may be a device including the CU or the DU, or a device including the CU and the DU, or a device including a control plane CU node (a CU-CP node), a user plane CU node (a CU-UP node), and the DU node.

The network device and the terminal device may be deployed on the land, including an indoor device, an outdoor device, a hand-held device, or an in-vehicle device; may be deployed on the water; or may be deployed on an airplane, a balloon, and a satellite in the air. Scenarios in which the network device and the terminal device are located are not limited in embodiment of this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, a computer-readable medium may include but is not limited to: a magnetic storage component (for example, a hard disk, a floppy disk, or a magnetic tape), an optical disc (for example, a compact disc (compact disc, CD), a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable storage media" may include but is not limited to a radio channel, and various other media that can store, include, and/or carry instructions and/or data.

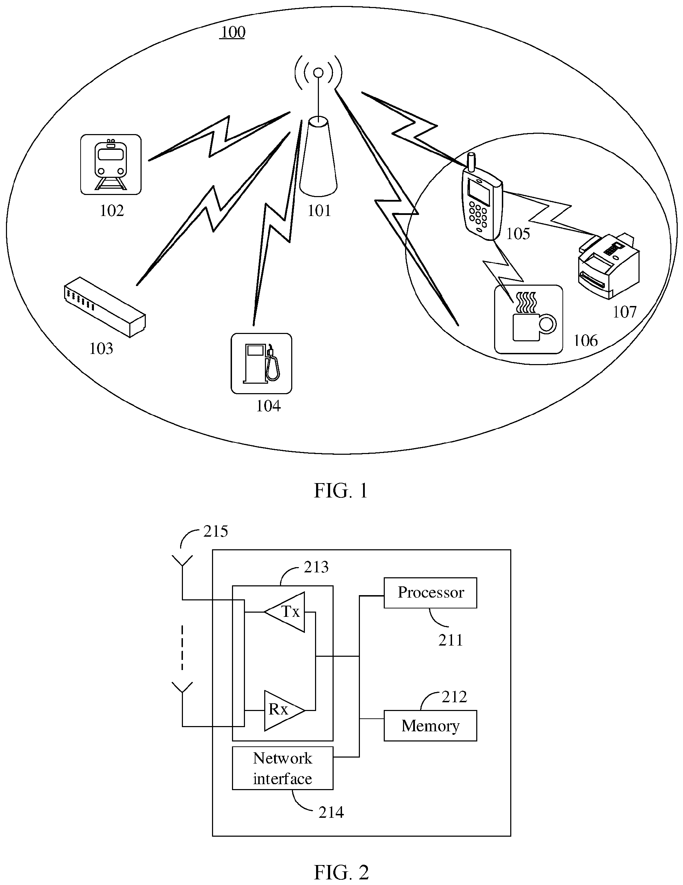

For ease of understanding embodiments of this application, a communication system shown in FIG. 1 is first used as an example to describe in detail a communication system applicable to embodiments of this application. As shown in FIG. 1, the communication system 100 may include at least one network device, for example, a network device 101 shown in FIG. 1. The communication system 100 may further include at least one terminal device, for example, terminal devices 102 to 107 shown in FIG. 1. The terminal devices 102 to 107 may be mobile or fixed. The network device 101 may communicate with one or more of the terminal devices 102 to 107 through a radio link. Each network device may provide communication coverage for a particular geographical area, and may communicate with a terminal device located in the coverage area.

Optionally, the terminal devices may directly communicate with each other. For example, direct communication between the terminal devices may be implemented by using a device to device (device to device, D2D) technology. As shown in FIG. 1, direct communication may be performed between terminal devices 105 and 106 and between terminal devices 105 and 107 by using the D2D technology. The terminal device 106 and the terminal device 107 may separately or simultaneously communicate with the terminal device 105.

Alternatively, the terminal devices 105 to 107 may separately communicate with the network device 101. For example, direct communication with the network device 101 may be implemented. For example, the terminal devices 105 and 106 in the figure may directly communicate with the network device 101. Alternatively, indirect communication with the network device 101 may be implemented. For example, the terminal device 107 in the figure communicates with the network device 101 through the terminal device 105.

A plurality of antennas may be disposed for each communication device. For each communication device in the communication system 100, the plurality of configured antennas may include at least one transmit antenna configured to send a signal and at least one receive antenna configured to receive a signal. Therefore, the communication devices in the communication system 100 may communicate with each other by using a multi-antenna technology.

It should be understood that FIG. 1 is only a simplified diagram of an example for ease of understanding. The communication system 100 may further include another network device or another terminal device, which is not shown in FIG. 1.

FIG. 2 is a diagram of an example structure of a network device according to an embodiment of this application. As shown in FIG. 2, the network device may be the network device 101 in the communication system shown in FIG. 1.

The network device includes at least one processor 211, at least one memory 212, at least one transceiver 213, at least one network interface 214, and one or more antennas 215. The processor 211, the memory 212, the transceiver 213, and the network interface 214 are connected, for example, connected through a bus. In embodiments of this application, the connection may include various interfaces, transmission lines, buses, or the like. This is not limited in embodiments. The antenna 215 is connected to the transceiver 213. The network interface 214 is configured to connect the network device to another communication device through a communication link. For example, the network interface 214 may include a network interface, for example, an S1 interface, between the network device and a core network element, and may include a network interface, for example, an X2 interface or an Xn interface, between the network device and another network device (for example, another network device or a core network element).

The processor 211 is mainly configured to: process a communication protocol and communication data, control the entire network device, execute a software program, and process data of the software program, for example, is configured to support the network device in performing an action described in embodiments. The network device may include a baseband processor and a central processing unit. The baseband processor is mainly configured to process the communication protocol and the communication data. The central processing unit is mainly configured to control the entire network device, execute the software program, and process the data of the software program. Functions of the baseband processor and the central processing unit may be integrated into the processor 211. A person skilled in the art may understand that the baseband processor and the central processing unit each may be an independent processor, and are interconnected by using a technology such as a bus. A person skilled in the art may understand that the network device may include a plurality of baseband processors to adapt to different network standards, and may include a plurality of central processing units to enhance a processing capability of the network device. The components of the network device may be connected through various buses. The baseband processor may also be expressed as a baseband processing circuit or a baseband processing chip. The central processing unit may alternatively be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 212 may exist independently, and is connected to the processor 211. Optionally, the memory 212 may be integrated with the processor 211, for example, integrated into a chip. The memory 212 can store program code for executing the technical solutions in embodiments of this application, and the processor 211 controls the execution. Various types of executed computer program code may also be considered as driver programs of the processor 211.

It should be noted that FIG. 2 shows only one memory and one processor. In an actual network device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in embodiments of this application.

The transceiver 213 may be configured to support receiving or sending of a radio frequency signal between the network device and a terminal device, and the transceiver 213 may be connected to the antenna 215. The transceiver 213 includes a transmitter Tx and a receiver Rx. Specifically, the one or more antennas 215 may receive a radio frequency signal. The receiver Rx of the transceiver 213 is configured to: receive the radio frequency signal from the antenna, convert the radio frequency signal into a digital baseband signal or a digital intermediate frequency signal, and provide the digital baseband signal or the digital intermediate frequency signal for the processor 211, so that the processor 2121 further processes the digital baseband signal or the digital intermediate frequency signal, for example, performs demodulation processing and decoding processing. In addition, the transmitter Tx of the transceiver 2113 is further configured to: receive a modulated digital baseband signal or digital intermediate frequency signal from the processor 2121, convert the modulated digital baseband signal or digital intermediate frequency signal into a radio frequency signal, and send the radio frequency signal through the one or more antennas 2115. Specifically, the receiver Rx may selectively perform one or more levels of down-mixing processing and analog-to-digital conversion processing on the radio frequency signal to obtain the digital baseband signal or the digital intermediate frequency signal. A sequence of the down-mixing processing and the analog-to-digital conversion processing is adjustable. The transmitter Tx may selectively perform one or more levels of up-mixing processing and digital-to-analog conversion processing on the modulated digital baseband signal or digital intermediate frequency signal to obtain the radio frequency signal. A sequence of the up-mixing processing and the digital-to-analog conversion processing is adjustable. The digital baseband signal and the digital intermediate frequency signal may be collectively referred to as a digital signal.

The transceiver may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes a receiving unit and a sending unit. The receiving unit may also be referred to as a receiver, an input port, a receiving circuit, or the like. The sending unit may be referred to as a transmitter machine, a transmitter, a transmit circuit, or the like.

It should be noted that FIG. 2 merely provides an example of a structure of the network device, but does not constitute a limitation on the network device. The structure of the network device is not specifically limited in embodiments of this application.

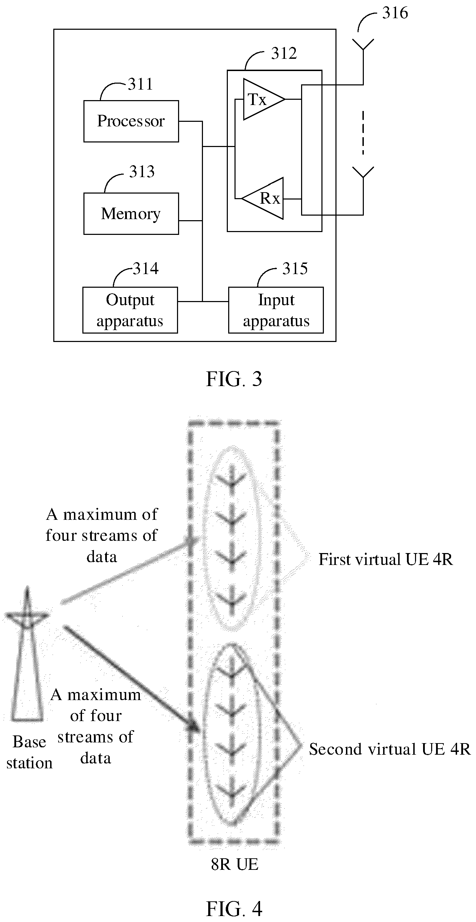

FIG. 3 is a diagram of an example structure of a terminal device according to an embodiment of this application. As shown in FIG. 3, the terminal device may be any terminal device 102 to 107 in the communication system shown in FIG. 1.

The terminal device includes at least one processor 311, at least one transceiver 312, and at least one memory 313. The processor 311, the memory 313, and the transceiver 312 are connected. Optionally, the terminal device may further include an output apparatus 314, an input apparatus 315, and one or more antennas 316. The antenna 316 is connected to the transceiver 312, and the output apparatus 314 and the input apparatus 315 are connected to the processor 311.

The transceiver 312, the memory 313, and the antenna 316 may implement similar functions with reference to the related description in FIG. 3.

The processor 311 may be a baseband processor or a CPU. The baseband processor and the CPU may be integrated or separated.

The processor 311 may be configured to implement various functions for the terminal device. For example, the processor is configured to process a communication protocol and communication data; or is configured to control the entire terminal device, execute a software program, and process data of the software program; or is configured to assist in completing a computing processing task, for example, graphics, image, or audio processing. Alternatively, the processor 311 is configured to implement one or more of the foregoing functions.

The output apparatus 314 communicates with the processor 311, and may display information in a plurality of manners. For example, the output apparatus 314 may be a liquid crystal display (Liquid Crystal Display, LCD) or a light emitting diode (Light Emitting Diode, LED) display device. The input apparatus 315 communicates with the processor 311, and may receive an input of a user in a plurality of manners. For example, the input apparatus 315 may be a touchscreen or a sensor.

It should be noted that FIG. 3 merely provides an example of a structure of the terminal device, but does not constitute a limitation on the terminal device. The structure of the terminal device is not specifically limited in embodiments of this application.

For ease of description, the following uses an example in which the network device is a base station and the terminal device is a UE for description.

In the foregoing communication system, if an 8R UE is used, a downlink throughput of a single user in a cell can be significantly increased, and coverage of a cell edge user can be further expanded. However, during multi-stream transmission (for example, a quantity of transport streams is greater than 4), the 8R UE may have problems of high implementation difficulty and high computational complexity.

Based on this, embodiments of this application provide a solution. Eight antennas included in the 8R UE may be divided into two antenna sets: a first antenna set and a second antenna set. The first antenna set and the second antenna set respectively include M antennas and 8-M antennas of the 8R UE, where M is a positive integer. For example, the first antenna set includes four antennas, the second antenna set includes four antennas, and the four antennas included in the first antenna set do not overlap the four antennas included in the second antenna set.

Optionally, it may be considered that the M antennas included in the first antenna set constitute one virtual UE, which is referred to as a first virtual UE. It may be further considered that the 8-M antennas included in the second antenna set constitute the other virtual UE, which is referred to as a second virtual UE. Each virtual UE separately receives and processes a signal. FIG. 4 is a diagram of splitting the 8R UE into the two virtual UEs. As shown in FIG. 4, the eight antennas of the 8R UE are divided into two antenna sets, corresponding to the two virtual UEs (the first virtual UE and the second virtual UE). The base station sends a maximum of eight streams of data to the 8R UE. Four streams of data are sent to the first virtual UE, and the other four streams are sent to the second virtual UE. Because the two virtual UEs separately receive and process signals, the base station may separately precode and send the four streams of data to be sent to the first virtual UE and the four streams of data to be sent to the second virtual UE.

It should be noted that the virtual UE mentioned above is only used as a visual description manner of dividing the eight antennas of the 8R UE into two antenna sets, but does not constitute a limitation on the virtual UE.

Based on the foregoing descriptions, embodiments of this application provide an SRS transmission method, to support downlink transmission between the split 8R UE and the base station.

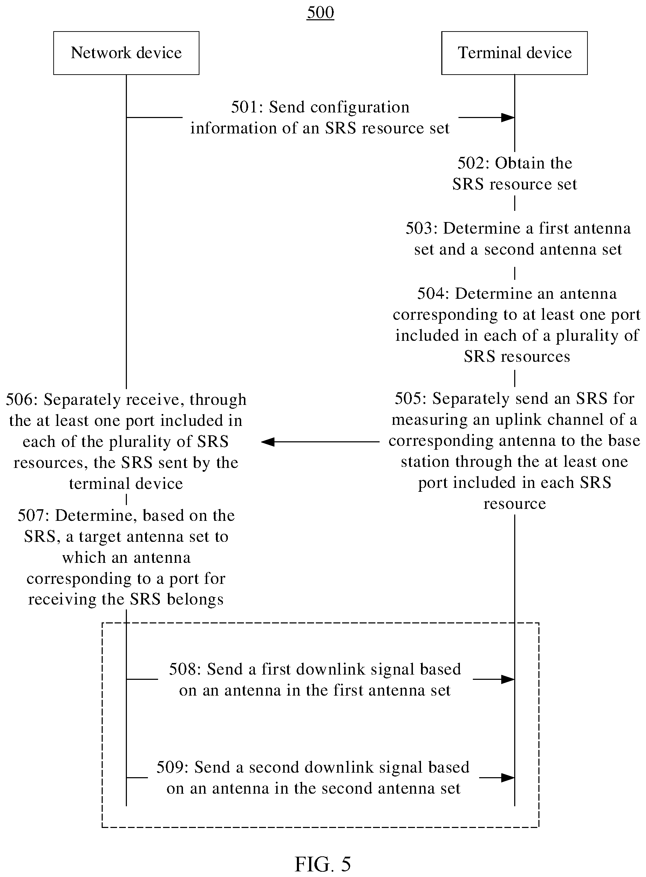

FIG. 5 is a flowchart of a process 500 of an SRS transmission method according to an embodiment of this application. The process 500 may be jointly performed by the foregoing network device (for example, the base station, or a chip or an apparatus component that is configured to implement a related function in the base station, which is not specifically limited herein) and the foregoing terminal device (for example, the 8R UE, or a chip or an apparatus component that is configured to implement a related function in the 8R UE, which is not specifically limited herein). The process 500 is described as a series of steps or operations. It should be understood that the process 500 may be performed in various sequences and/or simultaneously, and is not limited to a performing sequence shown in FIG. 5. The process 500 may include the following steps.

Step 501: The network device sends configuration information of an SRS resource set to the terminal device.

The SRS resource set (SRS resource set) includes a plurality of SRS resources (SRS resource), and each SRS resource includes at least one port (port). For example, one SRS resource includes {1, 2, 4, 8} ports. The network device may periodically configure, for the terminal device, an SRS resource set for sending an SRS, and indicate the SRS resource set to the terminal device by using the configuration information, so that the terminal device sends the SRS by using the plurality of SRS resources included in the SRS resource set. For this process, refer to a related standard protocol. Details are not described herein again. It should be noted that, in this embodiment of this application, a quantity of SRS resource sets is not limited, and there may be one or more SRS resource sets.

Step 502: The terminal device obtains the SRS resource set.

The terminal device may determine the SRS resource set based on the configuration information, and obtain the plurality of SRS resources included in the SRS resource set and the at least one port included in each SRS resource. For example, one SRS resource includes {1, 2, 4, 8} ports. In an implementation, the terminal may alternatively directly determine, based on the configuration information, the plurality of SRS resources included in the SRS resource set and the at least one port included in each SRS resource.

Step 503: The terminal device determines a first antenna set and a second antenna set.

The first antenna set and the second antenna set respectively include M antennas and 8-M antennas in eight antennas, where M is a positive integer.

In this embodiment of this application, the 8R UE may be used. As described above, the 8R UE is split into two UEs including 4R. The two UEs do not actually exist, and may be understood as virtual UEs. Each virtual UE separately receives and processes a signal. Based on this, in this embodiment of this application, it may be considered that the first antenna set is a set of M antennas of one (for example, a first virtual UE) of the two virtual UEs, and the second antenna set is a set of 8-M antennas of the other (for example, a second virtual UE) of the two virtual UEs. For example, M=4. It should be noted that, in this embodiment of this application, a UE including more antennas may be further used, for example, a 16R UE. Correspondingly, the 16R UE may be split into two virtual UEs including 8R. A first antenna set is a set of M antennas of a first virtual UE, and a second antenna set is a set of 16-M antennas of a second virtual UE. For example, M=8. Alternatively, the 16R UE may be split into four virtual UEs including 4R. In this case, four antenna sets may be formed. A first antenna set is a set of M1 antennas of a first virtual UE, a second antenna set is a set of M2 antennas of a second virtual UE, a third antenna set is a set of M3 antennas of a third virtual UE, and a fourth antenna set is a set of 16-M1-M2-M3 antennas of a fourth virtual UE. M1, M2, and M3 are all positive integers. For example, M1=M2=M3=4. It should be understood that the foregoing splitting manners of the UE (including the 8R UE and the 16R UE) are merely used as examples. A quantity of antennas included in the UE and a splitting manner of the UE are not specifically limited in this embodiment of this application.

For ease of description, the following uses an 8R UE as an example for description. The 8R UE includes eight antennas. It is assumed that identifiers of the eight antennas are 0 to 7. The UE may split the eight antennas by using the following methods, to determine the first antenna set and the second antenna set.

First method: The UE divides the eight antennas into two groups according to a preset rule, to obtain the first antenna set and the second antenna set.

The preset rule may be a rule negotiated by the base station and the UE in a configuration phase, or may be a rule determined and negotiated in a signaling interaction process. The preset rule may be manually set, may be set based on historical setting data, or may be set based on big data analysis. A manner and a basis of setting the preset rule are not specifically limited in this embodiment of this application.

In a possible implementation, the eight antennas may have a plurality of grouping results. For example, antennas identified as 0 to 3 belong to the first antenna set, and antennas identified as 4 to 7 belong to the second antenna set. For another example, antennas identified as odd numbers (1, 3, 5, and 7) belong to the first antenna set, and antennas identified as even numbers (0, 2, 4, and 6) belong to the second antenna set. For another example, the eight antennas are randomly divided into two groups, antennas identified as (0, 1, 4, and 7) belong to the first antenna set, and antennas identified as (2, 3, 5, and 6) belong to the second antenna set. The grouping result of the eight antennas is not specifically limited in this embodiment of this application.

Second method: The UE receives a CSI-RS sent by the base station, and then divides the eight antennas into two groups based on the CSI-RS, to obtain the first antenna set and the second antenna set.

The CSI-RS may be used for downlink channel measurement. Therefore, for the eight antennas, the base station may send the CSI-RS to the UE.

In this embodiment of this application, the UE may obtain an association relationship between the eight antennas based on the CSI-RS, and then divide the eight antennas into two groups based on the association relationship between the eight antennas, to obtain the first antenna set and the second antenna set.

The association relationship may be represented by a similarity between every two antennas. Based on the similarity between every two of the eight antennas, four antennas with highest similarity may be grouped into a same antenna set. The association relationship may be a correlation (correlation) or the like.

For example, the eight antennas are divided into two groups according to a postSNR criterion:

1. The UE obtains, based on the CSI-RS, a channel matrix H including the eight antennas.
2. An antenna i is determined based on $\max\limits_{i}((HH^{H})^{-1})_{i,i}$.
3. Three antennas with strong channel correlation with the antenna i are determined based on $\max\limits_{j,j\neq i}((HH^{H})^{-1})_{i,j}$. The four antennas correspond to one "virtual UE", and the other four antennas correspond to the other "virtual UE".

It should be noted that in this embodiment of this application, the correlation between the eight antennas may be obtained by using another method. This is not specifically limited herein.

In a possible implementation, the UE may send first grouping information to the base station. The first grouping information indicates SRS resources respectively corresponding to the first antenna set and the second antenna set.

Third method: The UE receives second grouping information sent by the base station. The second grouping information indicates the first antenna set and the second antenna set. Then, the UE determines the first antenna set and the second antenna set based on the second grouping information.

In this embodiment of this application, the base station may group the eight antennas of the UE, and then notify the UE of a grouping result by using the second grouping information. The second grouping information may clearly indicate the first antenna set and the second antenna set. For example, the second grouping information includes an antenna set identifier and an antenna identifier included in each antenna set: first antenna set 0 (antennas 0-3) and second antenna set 1 (antennas 4-7). For another example, the second grouping information includes an antenna identifier and a group identifier: antennas 0-3 0 (representing that the antennas 0 to 3 belong to the first antenna set), and antennas 4-7 1 (representing that the antennas 4 to 7 belong to the second antenna set). Alternatively, the second grouping information may implicitly indicate the first antenna set and the second antenna set. For example, in the second grouping information, identifiers (0 to 3) of four antennas written in the front belong to the first antenna set, and identifiers (4 to 7) of four antennas written in the back belong to the second antenna set. It should be noted that the second grouping information may alternatively be in another format. This is not specifically limited in this embodiment of this application.

In a possible implementation, if the UE groups the eight antennas by using the first method and the second method, the UE may not report a grouping result to the base station. That is, the UE does not send the first grouping information to the base station. In this way, grouping of the eight antennas of the UE is transparent and unknown for the base station.

Step 504: The terminal device determines an antenna corresponding to the at least one port included in each of the plurality of SRS resources.

The at least one antenna corresponding to the at least one port included in each SRS resource belongs to the first antenna set or the second antenna set. That is, each SRS resource includes at least one port, and the at least one port may correspond to at least one antenna of the terminal device (one port corresponds to one antenna). When the eight antennas of the terminal device are divided into two antenna sets, at least one antenna corresponding to at least one port included in one SRS resource belongs to one antenna set. For example, the SRS resource set includes one SRS resource, the SRS resource includes four ports, the four ports correspond to four antennas, and the four antennas belong to the first antenna set. For another example, the SRS resource set includes two SRS resources, one SRS resource includes two ports, the two ports correspond to two antennas, and the two antennas belong to the first antenna set. The other SRS resource includes one port, the port corresponds to one antenna, and the antenna belongs to the second antenna set. It should be understood that the antenna may also be an identifier of the antenna.

The UE includes a transmit radio frequency channel and a receive radio frequency channel. The transmit radio frequency channel may alternatively be referred to as a transmit antenna port (Tx port), a transmit channel, or the like. The receive radio frequency channel may alternatively be referred to as a receive antenna port (Rx port), a receive channel, or the like. This is not specifically limited in this embodiment of this application.

When the UE sends an SRS by using one SRS resource, a quantity of ports that may be used is determined based on a transmission and reception capability of the UE. For example, a 1T8R UE (with one transmit antenna port and eight receive antenna ports) can send an SRS on an uplink channel of one antenna through a maximum of one port. A 2T8R UE (with two transmit antenna ports and eight receive antenna ports) can send an SRS on uplink channels of two antennas through a maximum of two ports. A 4T8R UE (with four transmit antenna ports and eight receive antenna ports) can send an SRS on uplink channels of four antennas through a maximum of four ports. A 6T8R UE (with six transmit antenna ports and eight receive antenna ports) can send an SRS on uplink channels of six antennas through a maximum of six ports. An 8T8R UE (with eight transmit antenna ports and eight receive antenna ports) can send an SRS on uplink channels of eight antennas through a maximum of eight transmit antenna ports.

To enable the UE to send the SRS on uplink channels of the eight antennas, to measure all uplink and downlink channels of the eight antennas, the SRS resource set may be designed based on the transmission and reception capability of the UE, especially a quantity of SRS resources included in the SRS resource set and a quantity of ports included in each SRS resource. In addition, to improve accuracy of SRS measurement, uplink and downlink channels of four antennas included in a same virtual UE (that is, the first antenna set or the second antenna set) in the two virtual UEs corresponding to the 8R UE may be measured within a short time interval as far as possible.

This embodiment of this application may include the following several cases: It is assumed that identifiers of the eight antennas of the UE are 0 to 7, identifiers of four antennas included in the first antenna set (corresponding to the first virtual UE) are 0 to 3, and identifiers of four antennas included in the second antenna set (corresponding to the second virtual UE) are 4 to 7. In addition, in the following descriptions, there is no intersection of antennas corresponding to ports. To be specific, in any one of the following cases, one port in an SRS resource may correspond to one antenna, and different ports correspond to different antennas.

(1) 1 transmit 8 receive (1T8R)

When a quantity of transmit antenna ports of the terminal device is 1 and a quantity of receive antenna ports is 8, the SRS resource set includes eight SRS resources, and each SRS resource includes one port.

One port included in each of four SRS resources in the eight SRS resources corresponds to one of the four antennas in the first antenna set, and one port included in each of the other four SRS resources in the eight SRS resources corresponds to one of the four antennas in the second antenna set.

That is, when sending the SRS once, the 1T8R UE may use one port in one SRS resource, with the port corresponding to one antenna of the UE, to measure uplink and downlink channels of the antenna. The UE has eight antennas in total. Therefore, uplink and downlink channels of the eight antennas can be measured only after the SRS is sent eight times. To enable uplink and downlink channels of four antennas included in a same virtual UE to be measured within a short time interval, the four antennas included in the same virtual UE may be configured to continuously send the SRS in four separate transmissions.

Based on this, in the eight SRS resources, one port included in each of the first four SRS resources corresponds to one of the four antennas in the first antenna set (corresponding to the first virtual UE), and one port included in each of the last four SRS resources corresponds to one of the four antennas in the second antenna set (corresponding to the second virtual UE).

For example, one port included in the $1^{st}$ SRS resource corresponds to an antenna identifier 0, one port included in the $2^{nd}$ SRS resource corresponds to an antenna identifier 1, one port included in the $3^{rd}$ SRS resource corresponds to an antenna identifier 2, one port included in the $4^{th}$ SRS resource corresponds to an antenna identifier 3, one port included in the $5^{th}$ SRS resource corresponds to an antenna identifier 4, one port included in the $6^{th}$ SRS resource corresponds to an antenna identifier 5, one port included in the $7^{th}$ SRS resource corresponds to an antenna identifier 6, and one port included in the $8^{th}$ SRS resource corresponds to an antenna identifier 7.

It should be understood that ports included in the $1^{st}$ to the $4^{th}$ SRS resources correspond to the first antenna set, and ports included in the $5^{th}$ to the $8^{th}$ SRS resources correspond to the second antenna set. This does not constitute a limitation. This is mainly to emphasize that ports included in four consecutive SRS resources correspond to a same antenna set. In this embodiment of this application, ports included in the $1^{st}$ to the $4^{th}$ SRS resources may alternatively correspond to the second antenna set, and ports included in the $5^{th}$ to

the 8th SRS resources correspond to the first antenna set. In addition, there may be another correspondence. This is not specifically limited herein.

(2) 2 transmit 8 receive (2T8R)

When the quantity of transmit antenna ports of the terminal device is 2 and the quantity of receive antenna ports is 8, the SRS resource set includes four SRS resources, and each SRS resource includes two ports.

Two ports included in each of two SRS resources in the four SRS resources correspond to two of the four antennas in the first antenna set, and two ports included in each of the other two SRS resources in the four SRS resources correspond to two of the four antennas in the second antenna set.

That is, when sending the SRS once, the 2T8R UE may use two ports in one SRS resource, with the two ports corresponding to two antennas of the UE, to respectively measure uplink and downlink channels of the two antennas. The UE has eight antennas in total. Therefore, uplink and downlink channels of the eight antennas can be measured only after the SRS is sent four times. To enable uplink and downlink channels of four antennas included in a same virtual UE to be measured within a short time interval, the four antennas included in the same virtual UE may be configured to continuously send the SRS in two separate transmissions.

Based on this, in the four SRS resources, two ports included in each of the first two SRS resources correspond to two of the four antennas in the first antenna set (corresponding to the first virtual UE), and two ports included in each of the last two SRS resources correspond to two of the four antennas in the second antenna set (corresponding to the second virtual UE).

For example, two ports included in the 1st SRS resource respectively correspond to antenna identifiers 0 and 1, two ports included in the 2nd SRS resource respectively correspond to antenna identifiers 2 and 3, two ports included in the 3rd SRS resource respectively correspond to antenna identifiers 4 and 5, and two ports included in the 4th SRS resource respectively correspond to antenna identifiers 6 and 7.

It should be understood that ports included in the 1st and the 2nd SRS resources correspond to the first antenna set, and ports included in the 3rd and the 4th SRS resources correspond to the second antenna set. This does not constitute a limitation. This is mainly to emphasize that ports included in two consecutive SRS resources correspond to a same antenna set. In this embodiment of this application, ports included in the 1st and the 2nd SRS resources may alternatively correspond to the second antenna set, and ports included in the 3rd and the 4th SRS resources correspond to the first antenna set. In addition, there may be another correspondence. This is not specifically limited herein.

(3) 4 transmit 8 receive (4T8R)

When the quantity of transmit antenna ports of the terminal device is 4 and the quantity of receive antenna ports is 8, the SRS resource set includes two SRS resources, and each SRS resource includes four ports.

Four ports included in one SRS resource in the two SRS resources correspond to the four antennas in the first antenna set, and four ports included in the other SRS resource in the two SRS resources correspond to the four antennas in the second antenna set.

That is, when sending the SRS once, the 4T8R UE may use four ports in one SRS resource, with the four ports corresponding to four antennas of the UE, to respectively measure uplink and downlink channels of the four antennas. The UE has eight antennas in total. Therefore, uplink and downlink channels of the eight antennas can be measured only after the SRS is sent twice. To enable uplink and downlink channels of four antennas included in a same virtual UE to be measured within a short time interval, the four antennas included in the same virtual UE may be configured to send the SRS once.

Based on this, in the two SRS resources, four ports included in the former SRS resource correspond to the four antennas in the first antenna set (corresponding to the first virtual UE), and four ports included in the latter SRS resource correspond to the four antennas in the second antenna set (corresponding to the second virtual UE).

For example, four ports included in the 1st SRS resource respectively correspond to antenna identifiers 0 to 3, and four ports included in the 2nd SRS resource respectively correspond to antenna identifiers 4 to 7.

It should be understood that a port included in the 1st SRS resource corresponds to the first antenna set, and a port included in the 2nd SRS resource corresponds to the second antenna set. This does not constitute a limitation. This is mainly to emphasize that ports included in a same SRS resource correspond to a same antenna set. In this embodiment of this application, a port included in the 1st SRS resource alternatively corresponds to the second antenna set, and a port included in the 2nd SRS resource corresponds to the first antenna set.

(4) 6 transmit 8 receive (6T8R)

When the quantity of transmit antenna ports of the terminal device is 6 and the quantity of receive antenna ports is 8, the SRS resource set includes three SRS resources.

A first SRS resource includes two ports, a second SRS resource includes four ports, and a third SRS resource includes two ports. The two ports included in the first SRS resource correspond to two of the four antennas in the first antenna set, the four ports included in the second SRS resource correspond to the four antennas in the second SRS resource correspond to the four antennas in the second antenna set, and the two ports included in the third SRS resource correspond to the other two of the four antennas in the first antenna set.

That is, the UE has eight antennas in total. Considering an antenna switch delay, all uplink and downlink channels of the eight antennas can be measured by using three SRS resources. To enable uplink and downlink channels of four antennas included in a same virtual UE to be measured within a short time interval, the four antennas included in the same virtual UE may be configured to send the SRS in one or two separate transmissions.

Based on this, in the three SRS resources, two ports included in the 1st SRS resource correspond to two of the four antennas in the first antenna set (corresponding to the first virtual UE), four ports included in the 2nd SRS resource correspond to the four antennas in the second antenna set (corresponding to the second virtual UE), and two ports included in the 3rd SRS resource correspond to the other two of the four antennas in the first antenna set (corresponding to the first virtual UE). An antenna switch time is required for using the 1st SRS resource and the 3rd SRS resource, and the switch time overlaps a time for using the 2nd SRS resource, so that an antenna switch delay can be shortened.

For example, the two ports included in the 1st SRS resource respectively correspond to antenna identifiers 0 and 1, the four ports included in the 2nd SRS resource respectively correspond to antenna identifiers 4 to 7, and the two ports included in the 3rd SRS resource respectively correspond to antenna identifiers 2 and 3.

It should be understood that ports included in the 1st and the 3rd SRS resources correspond to the first antenna set, and ports included in the 2nd SRS resource correspond to the second antenna set. However, this is not specifically limited in this embodiment of this application. In addition, there may be another correspondence. This is not specifically limited herein.

(5) 8 transmit 8 receive (8T8R)

When the quantity of transmit antenna ports of the terminal device is 8 and the quantity of receive antenna ports is 8, the SRS resource set includes one SRS resource, and the SRS resource includes eight ports.

Four ports included in the SRS resource correspond to the four antennas in the first antenna set, and the other four ports included in the SRS resource correspond to the four antennas in the second antenna set.

That is, when sending the SRS once, the 8T8R UE may use the eight ports in the SRS resource, with the eight ports corresponding to the eight antennas of the UE, to respectively measure uplink and downlink channels of the eight antennas. The UE has eight antennas in total. Therefore, all uplink and downlink channels of the eight antennas can be measured by using only one SRS resource in total.

Based on this, in the SRS resource, four ports all correspond to the four antennas in the first antenna set (corresponding to the first virtual UE), and the other four ports all correspond to the four antennas in the second antenna set (corresponding to the second virtual UE).

For example, four ports included in the SRS resource respectively correspond to antenna identifiers 0 to 3, and the other four ports respectively correspond to antenna identifiers 4 to 7.

It should be understood that the eight ports included in the SRS resource correspond to both the first antenna set and the second antenna set. However, this is not specifically limited in this embodiment of this application.

In addition, when antennas corresponding to the eight ports included in the SRS resource are from both the first antenna set and the second antenna set, to distinguish the eight ports and further distinguish the antenna sets corresponding to the ports, the following four methods may be used:

① Ports used by the four antennas in the first antenna set to send the SRS and ports used by the four antennas in the second antenna set to send the SRS are distinguished by using combs (comb).

The SRS may occupy a plurality of symbols in a slot for repeated sending or frequency hopping sending on the plurality of symbols. The SRS sent on one OFDM symbol may be distributed on combs (comb) in frequency domain. Therefore, the two ports can be allocated resources in a comb manner, for further distinguishing.

② Ports used by the four antennas in the first antenna set to send the SRS and ports used by the four antennas in the second antenna set to send the SRS are distinguished by using cyclic shifts.

The SRS may occupy a plurality of symbols in a slot for repeated sending or frequency hopping sending on the plurality of symbols. A cyclic shift (cyclic shift, CS) may be separately added to the SRS sent on a same OFDM symbol in code domain. Therefore, the two ports can be allocated resources through cyclic shift addition, for further distinguishing.

③ Ports used by the four antennas in the first antenna set to send the SRS and ports used by the four antennas in the second antenna set to send the SRS are distinguished by using port indexes.

As described above, in two RFICs, one RFIC corresponds to the first virtual UE, and the other RFIC corresponds to the second virtual UE. Therefore, port identifiers may be set for two ports of the UE, and the two ports may be distinguished by using the port identifiers, to determine antenna sets corresponding to the ports.

④ Ports used by the four antennas in the first antenna set to send the SRS and ports used by the four antennas in the second antenna set to send the SRS are distinguished by using two adjacent symbols.

The SRS may occupy a plurality of symbols in a slot for repeated sending or frequency hopping sending on the plurality of symbols. A cyclic shift (cyclic shift, CS) may be separately added to the SRS sent on a same OFDM symbol in code domain. Therefore, the two ports can be allocated resources through cyclic shift addition, for further distinguishing.

It should be noted that in this embodiment of this application, the ports may be distinguished by using another method. This is not specifically limited herein.

Step 505: The terminal device separately sends an SRS for measuring an uplink channel of a corresponding antenna to the base station through the at least one port included in each SRS resource.

In several cases of step 504, the UE may send the SRS to the base station by using the SRS resource. For a specific sending manner, refer to a related protocol. Details are not described herein again.

Step 506: The network device separately receives, through the at least one port included in each of the plurality of SRS resources, the SRS sent by the terminal device.

The terminal device sends the SRS, and the network device receives the SRS. Because the SRS resource set for sending the SRS is configured by the network device, the network device may know in advance a resource on which the SRS is received. For details, refer to a related protocol. Details are not described herein again.

Step 507: The network device determines, based on the SRS resource, a target antenna set to which an antenna corresponding to the port for receiving the SRS belongs.

After accessing the base station, the UE may report the quantity of transmit antenna ports and the quantity of receive antenna ports of the UE to the base station through signaling interaction between the base station and the UE. When sending a downlink signal to the UE, the base station may first read the quantity of transmit antenna ports and the quantity of receive antenna ports of the UE from a preset memory location. Therefore, based on the quantity of transmit antenna ports of the UE, the network device may determine, based on the configured SRS resource, the target antenna set to which the antenna corresponding to the port for receiving the SRS belongs, to perform precoding for downlink transmission.

Corresponding to step 504, the network device may determine, according to a same rule by which the terminal device sends the SRS through a port in an SRS resource, a set to which an antenna belongs. This embodiment of this application may include the following several cases:

(1) 1T8R

When the quantity of transmit antenna ports of the terminal device is 1 and the quantity of receive antenna ports is 8, the SRS resource set includes eight SRS resources, and each SRS resource includes one port.

One antenna corresponding to one port included in each of four SRS resources in the eight SRS resources belongs to the first antenna set, and one antenna corresponding to one port included in each of the other four SRS resources in the eight SRS resources belongs to the second antenna set.

(2) 2T8R

When the quantity of transmit antenna ports of the terminal device is 2 and the quantity of receive antenna ports is 8, the SRS resource set includes four SRS resources, and each SRS resource includes two ports.

Two antennas corresponding to two ports included in each of two SRS resources in the four SRS resources belong to the first antenna set, and two antennas corresponding to two ports included in each of the other two SRS resources in the four SRS resources belong to the second antenna set.

(3) 4T8R

When the quantity of transmit antenna ports of the terminal device is 4 and the quantity of receive antenna ports is 8, the SRS resource set includes two SRS resources, and each SRS resource includes four ports.

Four antennas corresponding to four ports included in one SRS resource in the two SRS resources belong to the first antenna set, and four antennas corresponding to four ports included the other SRS resource in the two SRS resources belong to the second antenna set.

(4) 6T8R

When the quantity of transmit antenna ports of the terminal device is 6 and the quantity of receive antenna ports is 8, the SRS resource set includes three SRS resources.

A first SRS resource includes two ports, a second SRS resource includes four ports, and a third SRS resource includes two ports.

Two antennas corresponding to the two ports included in the first SRS resource belong to the first antenna set, four antennas corresponding to the four ports included in the second SRS resource belong to the second antenna set, and two antennas corresponding to the two ports included in the third SRS resource belong to the first antenna set.

(5) 8T8R

When the quantity of transmit antenna ports of the terminal device is 8 and the quantity of receive antenna ports is 8, the SRS resource set includes one SRS resource, and the SRS resource includes eight ports.

Four antennas corresponding to four ports included in the SRS resource belong to the first antenna set, and four antennas corresponding to the other four ports included in the SRS resource belong to the second antenna set.

Similarly, when a plurality of antennas corresponding to a plurality of ports included in an SRS resource are from both the first antenna set and the second antenna set, to distinguish the eight ports and further distinguish the antenna sets corresponding to the ports, the following four methods may be used:

① Ports used by the four antennas in the first antenna set to send the SRS and ports used by the four antennas in the second antenna set to send the SRS are distinguished by using combs (comb).

② Ports used by the four antennas in the first antenna set to send the SRS and ports used by the four antennas in the second antenna set to send the SRS are distinguished by using cyclic shifts.

③ Ports used by the four antennas in the first antenna set to send the SRS and ports used by the four antennas in the second antenna set to send the SRS are distinguished by using port indexes.

④ Ports used by the four antennas in the first antenna set to send the SRS and ports used by the four antennas in the second antenna set to send the SRS are distinguished by using two adjacent symbols.

It should be noted that in this embodiment of this application, the ports may be distinguished by using another method. This is not specifically limited herein.

Step 508: The network device sends a first downlink signal based on an antenna in the first antenna set.

Correspondingly, the UE receives the first downlink signal based on the antenna in the first antenna set. The first downlink signal is sent by the network device to the first antenna set.

Step 509: The network device sends a second downlink signal based on an antenna in the second antenna set.

Correspondingly, the UE receives the second downlink signal based on the antenna in the second antenna set. The second downlink signal is sent by the network device to the second antenna set.

It should be noted that step 508 and step 509 are optional steps in this embodiment of this application, and are framed by dashed lines in the accompanying drawing.

The network device may perform channel estimation based on the SRS to obtain an uplink channel, and then obtain a downlink channel based on reciprocity between uplink and downlink channels. That the base station performs channel estimation based on an SRS may be understood as: The base station obtains uplink channel state information based on the SRS, and then obtains downlink channel state information. That the base station performs weight calculation based on the SRS may be understood as: The base station performs downlink precoding matrix calculation based on the received channel state information. After completing channel estimation and weight calculation, the base station can learn of a downlink precoding matrix, to perform downlink transmission.

The first downlink signal and the second downlink signal are different downlink signals. That is, the first downlink signal sent by the base station to the first antenna set is different from the second downlink signal sent by the base station to the second antenna set. After the 8R UE is split into two 4R UEs (virtual UEs), from a perspective of the base station, the terminal is still an 8R UE, and is only an 8R UE including two virtual 4R UEs. Each virtual 4R UE receives a part of data streams. If the base station transmits a total of eight streams of data to the 8R UE, each virtual 4R UE may receive four streams of data, and there is no intersection of data streams received by the two virtual 4R UEs. In this embodiment of this application, a downlink signal may include a physical downlink control channel (physical downlink control channel, PDCCH), a physical downlink shared channel (physical downlink shared channel, PDSCH), downlink control information (downlink control information, DCI), or the like. This is not specifically limited herein.

In a possible implementation, the network device may send a correspondence between a port for DMRS downlink transmission and a set identifier to the terminal device. The set identifier is an identifier of the first antenna set or an identifier of the second antenna set.

After determining the antenna sets to which the eight antennas of the UE belong, the network device may consider the 8R UE as two 4R UEs (virtual UEs), to divide multi-stream data (generally, a quantity of transport streams is greater than 4) sent to the 8R UE into two groups of data streams to be sent to the first virtual UE and the second virtual UE. For example, to send eight streams of data, the network device precodes four streams of data, and then sends the four streams of data to the four antennas (the first antenna set) of the first virtual UE; and precodes the other four streams of data, and then sends the four streams of data to the four antennas (the second antenna set) of the second virtual UE. In this way, the network device and the 8R UE can transmit a downlink signal based on the two split virtual UEs, so that each virtual UE separately receives and processes a signal, and a problem of high implementation difficulty and high computational complexity of the 8R UE can be resolved.

It should be noted that, in this embodiment of this application, a specific procedure in which the network device performs downlink transmission based on the downlink precoding matrix is not limited. For details, refer to descriptions in a current related technology. Channel estimation and weight calculation performed by a network device side based on the SRS, and a specific behavior after channel estimation are not limited.

In addition, the foregoing listed reference signal that is the SRS is merely an example, and should not constitute any limitation on this application. This application does not exclude a possibility of defining another reference signal in a future protocol to implement a same or similar function.

In this embodiment of this application, after the first antenna set and the second antenna set are determined, the network device may consider the 8R UE as the two 4R UEs (virtual UEs), and separately measure uplink and downlink channels of the two virtual UEs. In this way, precoding can be performed based on a more accurate channel, to improve precoding accuracy, and ensure signal transmission performance of the split 8R UE.

In a possible implementation, the SRS may be a precoded sounding reference signal precoded SRS. The UE may send the precoded SRS to the base station in the following several cases:

(1) 4 transmit 8 receive (4T8R)

When the quantity of transmit antenna ports of the terminal device is 4 and the quantity of receive antenna ports is 8, the SRS resource set includes two SRS resources.

A first SRS resource includes n1 ports, and a second SRS resource includes n2 ports.

Each of the n1 ports included in the first SRS resource corresponds to the four antennas in the first antenna set, and each of the n2 ports included in the second SRS resource corresponds to the four antennas in the second antenna set, where n1≤4, and n2≤4.

That is, when sending the SRS once, the 4T8R UE may use the n1 ports in the first SRS resource, or may use the n2 ports in the second SRS resource, with each of the n1 or n2 ports corresponding to four antennas of the UE, to separately measure uplink and downlink channels of the four antennas.

For example, each of the n1 ports included in the first SRS resource corresponds to antenna identifiers 0 to 3, and each of the n2 ports included in the second SRS resource corresponds to antenna identifiers 4 to 7.

It should be understood that a port included in the first SRS resource corresponds to the first antenna set, and a port included in the second SRS resource corresponds to the second antenna set. This does not constitute a limitation. This is mainly to emphasize that ports included in a same SRS resource correspond to a same antenna set. In this embodiment of this application, a port included in the first SRS resource alternatively corresponds to the second antenna set, and a port included in the second SRS resource corresponds to the first antenna set.

(2) 8 transmit 8 receive (8T8R)

When the quantity of transmit antenna ports of the terminal device is 8 and the quantity of receive antenna ports is 8, the SRS resource set includes one SRS resource, and the SRS resource includes n1+n2 ports.

Each of n1 ports included in the SRS resource corresponds to the four antennas in the first antenna set, and each of the other n2 ports included in the SRS resource corresponds to the four antennas in the second antenna set, where n1≤4, and n2≤4.

That is, when sending the SRS once, the 8T8R UE may use the n1+n2 ports in the SRS resource, with each of the n1+n2 ports corresponding to four antennas of the UE, to separately measure uplink and downlink channels of the eight antennas.

For example, in the SRS resource, each of the n1 ports corresponds to antenna identifiers 0 to 3, and each of the n2 ports corresponds to antenna identifiers 4 to 7.

It should be understood that the n1+n2 ports included in the SRS resource correspond to both the first antenna set and the second antenna set. However, this is not specifically limited in this embodiment of this application.

In addition, when antennas corresponding to a plurality of ports included in one SRS resource are from both the first antenna set and the second antenna set, to distinguish the plurality of ports and further distinguish the antenna sets corresponding to the ports, the following four methods may be used:

> ① Ports used by the four antennas in the first antenna set to send the SRS and ports used by the four antennas in the second antenna set to send the SRS are distinguished by using combs (comb).
> ② Ports used by the four antennas in the first antenna set to send the SRS and ports used by the four antennas in the second antenna set to send the SRS are distinguished by using cyclic shifts.
> ③ Ports used by the four antennas in the first antenna set to send the SRS and ports used by the four antennas in the second antenna set to send the SRS are distinguished by using port indexes.
> ④ Ports used by the four antennas in the first antenna set to send the SRS and ports used by the four antennas in the second antenna set to send the SRS are distinguished by using two adjacent symbols.

It should be noted that in this embodiment of this application, the ports may be distinguished by using another method. This is not specifically limited herein.

In addition, in a scenario in which the UE sends the precoded SRS, the UE may obtain a first precoder U and a second precoder U required for non-linear precoding, where the first precoder U corresponds to the first antenna set, and the second precoder U corresponds to the second antenna set; and send the first precoder U and the second precoder U to the network device.

In a possible implementation, the UE may first obtain precoding indication information. The precoding indication information indicates a precoding scheme of the network device. The UE sends the first precoder U and the second precoder U to the network device only when the precoding scheme of the network device is a non-linear precoding scheme.

In a case in which a port corresponds to a plurality of antennas (antenna switch exists), when a reference signal is sent on the port through the plurality of antennas, beamforming needs to be performed on the reference signal. A specific reason is that the port corresponds to a precoding vector. The precoding vector corresponds to a spatial direction, the precoding vector may also be referred to as a beamforming vector, and a function of the precoding vector is to perform beamforming on the reference signal. Specifically, a plurality of elements in the precoding vector correspond to the plurality of antennas, and the reference signal is multiplied by each element in the precoding vector, and is sent on a corresponding antenna, to implement beamforming on the reference signal. It can be learned from the foregoing that the SRS resources determined by the base station correspond to the plurality of antennas by configuring ports included in the SRS resources, to support beamforming on the SRS. Therefore, signal transmission quality can be improved, spatial multiplexing can be implemented, spectrum utilization can be improved, and SRS port resource overheads can be reduced.

The base station may send a CSI-RS to the terminal device. The CSI-RS is for calculating a precoding matrix, and the precoding matrix is used by the terminal device to precode a reference signal to obtain a precoded reference signal. That is, after receiving the CSI-RS, the terminal device calculates the precoding matrix based on the CSI-RS, sends the precoded SRS based on the precoding matrix obtained through calculation, and sends the precoded SRS to the base station.

In this embodiment of this application, the precoding matrix may be indicated by using a codebook structure that indicates the precoding matrix. The precoding matrix (denoted as U for short below) may be an $M \times N3$ matrix, or the precoding matrix (denoted as U for short below) may be an $N3 \times M$ matrix. M is a quantity of receive antennas of the terminal device, and N3 is a quantity of reference signal ports of the precoded SRS sent by the terminal device. The terminal device needs to report U.

That the base station performs channel estimation based on the precoded SRS may be understood as: The base station obtains uplink channel state information CSI based on the precoded SRS, and then obtains downlink channel state information CSI based on uplink and downlink reciprocity. That the base station performs weight calculation based on the precoded SRS may be understood as: The base station calculates a downlink precoding matrix based on the received channel state information. In some scenarios, the base station needs to learn of a precoding matrix used by the terminal device to precode the SRS. In some scenarios, the base station needs to know a channel eigenvector. For example, in some precoding schemes (for example, ZF), the base station needs to learn of a channel eigenvector, and the base station may obtain the channel eigenvector from a received signal based on the precoded SRS sent by the terminal device. For another example, in some precoding schemes (for example, non-linear precoding or transmit/receive iterative precoding), the base station needs to learn of complete downlink channel information. However, the base station cannot obtain sufficient downlink channel information based on the received precoded SRS, and the terminal device needs to report information indicating the precoding matrix.

In this implementation, to reduce feedback overheads of U, the UE may optimize U in at least one of the following manners:

　　1. Angles of all elements in each row of a first matrix representing the first precoder U are adjusted, so that a first column of the first matrix consists entirely of real numbers; and angles of all elements in each row of the second matrix representing the second precoder U are adjusted, so that a first column of the second matrix consists entirely of real numbers.

　　A precoding result of the network device is not affected when rows of U are rotated by a same angle, and a first column of U may be rotated to a real number. Because a feedback amount of a real number is less than that of a complex number, when a column of U is a real number, a feedback amount can be reduced.

　　2. A reporting order of each column of the first matrix representing the first precoder U or the second matrix representing the second precoder U is adjusted, so that an element with a largest modulus in the first matrix and the second matrix is located in the first column of the first matrix or the first column of the second matrix.

　　A column that includes the element with the largest modulus in U may be the foregoing column that consists of real numbers. For example, a column that consists of real numbers and that includes the element with the largest modulus is the first column.

　　3. Normalization is performed on the first matrix representing the first precoder U and the second matrix representing the second precoder U by using the element with the largest modulus.

The element with the largest modulus in the first column of U is normalized to a fixed value, and the element with the largest modulus does not need to be reported, but a location of the modulus with the largest modulus needs to be reported. After the element with the largest modulus is adjusted to the first column, only a row number needs to be reported, so that feedback overheads of U can be further reduced.

The first precoder U and the second precoder U have a same frequency domain granularity. The frequency domain granularity is a bandwidth that is set when the precoder U is obtained, that is, a bandwidth used for a same precoder U.

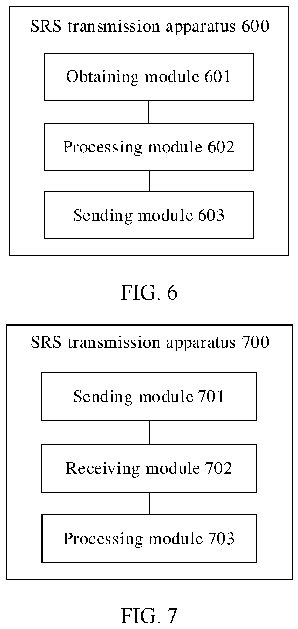

FIG. 6 is a diagram of a structure of an SRS transmission apparatus 600 in a terminal device according to this application. As shown in FIG. 6, the apparatus 600 is used in the terminal device, and may include an obtaining module 601, a processing module 602, and a sending module 603.

The obtaining module 601 is configured to obtain a channel sounding reference signal SRS resource set, where the SRS resource set includes a plurality of SRS resources, and each SRS resource includes at least one port. The processing module 602 is configured to: determine a first antenna set and a second antenna set, where the first antenna set and the second antenna set respectively include M antennas and 8-M antennas in eight receive antennas, and M is a positive integer; and determine an antenna corresponding to the at least one port included in each of the plurality of SRS resources, where at least one antenna corresponding to the at least one port included in each SRS resource belongs to the first antenna set or the second antenna set. The sending module 603 is configured to separately send an SRS for measuring an uplink channel of the corresponding antenna to a base station through the at least one port included in each SRS resource.

In a possible implementation, the processing module 602 is specifically configured to divide the eight receive antennas into two groups according to a preset rule, to obtain the first antenna set and the second antenna set.

In a possible implementation, the processing module 602 is specifically configured to: receive a channel state information reference signal CSI-RS sent by the network device; and divide the eight receive antennas into two groups based on the CSI-RS, to obtain the first antenna set and the second antenna set.

In a possible implementation, the sending module 603 is further configured to send first grouping information to the network device. The first grouping information indicates SRS resources respectively corresponding to the first antenna set and the second antenna set.

In a possible implementation, when a quantity of transmit antenna ports of the terminal device is 1 and a quantity of receive antenna ports is 8, the SRS resource set includes eight SRS resources, and each SRS resource includes one port.

One port included in each of four SRS resources in the eight SRS resources corresponds to one of four antennas in the first antenna set, one port included in each of the other four SRS resources in the eight SRS resources corresponds to one of four antennas in the second antenna set, and there is no intersection of the antennas corresponding to the different ports.

In a possible implementation, when the quantity of transmit antenna ports of the terminal device is 2 and the quantity of receive antenna ports is 8, the SRS resource set includes four SRS resources, and each SRS resource includes two ports.

Two ports included in each of two SRS resources in the four SRS resources correspond to two of the four antennas in the first antenna set, two ports included in each of the other two SRS resources in the four SRS resources correspond to two of the four antennas in the second antenna set, and there is no intersection of the antennas corresponding to the different ports.

In a possible implementation, when the quantity of transmit antenna ports of the terminal device is 4 and the quantity of receive antenna ports is 8, the SRS resource set includes two SRS resources, and each SRS resource includes four ports.

Four ports included in one SRS resource in the two SRS resources correspond to the four antennas in the first antenna set, four ports included in the other SRS resource in the two SRS resources correspond to the four antennas in the second antenna set, and there is no intersection of the antennas corresponding to the different ports.

In a possible implementation, when the quantity of transmit antenna ports of the terminal device is 6 and the quantity of receive antenna ports is 8, the SRS resource set includes three SRS resources.

A first SRS resource includes two ports, a second SRS resource includes four ports, and a third SRS resource includes two ports.

The two ports included in the first SRS resource correspond to two of the four antennas in the first antenna set, the four ports included in the second SRS resource correspond to the four antennas in the second antenna set, the two ports included in the third SRS resource correspond to the other two of the four antennas in the first antenna set, and there is no intersection of the antennas corresponding to the different ports.

In a possible implementation, when the quantity of transmit antenna ports of the terminal device is 8 and the quantity of receive antenna ports is 8, the SRS resource set includes one SRS resource, and the SRS resource includes eight ports.

Four ports included in the SRS resource correspond to the four antennas in the first antenna set, the other four ports included in the SRS resource correspond to the four antennas in the second antenna set, and there is no intersection of the antennas corresponding to the different ports.

In a possible implementation, the SRS is a precoded sounding reference signal precoded SRS.

In a possible implementation, when the quantity of transmit antenna ports of the terminal device is 4 and the quantity of receive antenna ports is 8, the SRS resource set includes two SRS resources.

A first SRS resource includes n1 ports, and a second SRS resource includes n2 ports.

Each of the n1 ports included in the first SRS resource corresponds to the four antennas in the first antenna set, and each of the n2 ports included in the second SRS resource corresponds to the four antennas in the second antenna set, where n1≤4, and n2≤4.

In a possible implementation, when the quantity of transmit antenna ports of the terminal device is 8 and the quantity of receive antenna ports is 8, the SRS resource set includes one SRS resource, and the SRS resource includes n1+n2 ports.

Each of n1 ports included in the SRS resource corresponds to the four antennas in the first antenna set, and each of the other n2 ports included in the SRS resource corresponds to the four antennas in the second antenna set, where n1≤4, and n2≤4.

In a possible implementation, a port used by an antenna in the first antenna set to send an SRS and a port used by an antenna in the second antenna set to send an SRS are distinguished by using combs; a port used by an antenna in the first antenna set to send an SRS and a port used by an antenna in the second antenna set to send an SRS are distinguished by using cyclic shifts; a port used by an antenna in the first antenna set to send an SRS and a port used by an antenna in the second antenna set to send an SRS are distinguished by using port indexes; or a port used by an antenna in the first antenna set to send an SRS and a port used by an antenna in the second antenna set to send an SRS are distinguished by using two adjacent symbols.

In a possible implementation, the obtaining module 601 is further configured to obtain a first precoder U and a second precoder U. The first precoder U corresponds to the first antenna set, and the second precoder U corresponds to the second antenna set. The sending module 603 is further configured to send the first precoder U and the second precoder U to the network device.

In a possible implementation, the obtaining module 601 is further configured to obtain precoding indication information. The precoding indication information indicates a precoding scheme of the network device. The sending module 603 is specifically configured to: when the precoding scheme of the network device is a non-linear precoding scheme, send the first precoder U and the second precoder U to the network device.

In a possible implementation, the first precoder U and the second precoder U have a same frequency domain granularity.

In a possible implementation, the obtaining module 601 is specifically configured to: obtain a downlink channel based on the received CSI-RS; and obtain the first precoder U and the second precoder U based on the downlink channel.

In a possible implementation, a first column of a first matrix of the first precoder U consists entirely of real numbers, and a first column of a second matrix of the second precoder U consists entirely of real numbers.

In a possible implementation, an element with a largest modulus included in the first matrix of the first precoder U and the second matrix of the second precoder U is located in the first column of the first matrix or the first column of the second matrix.

In a possible implementation, the first matrix of the first precoder U and the second matrix of the second precoder U are separately obtained through normalization based on the element with the largest modulus.

The apparatus in this embodiment may be configured to perform the technical solutions performed by the terminal device in the foregoing method embodiment shown in FIG. 5. Implementation principles and technical effects thereof are similar, and details are not described herein again.

FIG. 7 is a diagram of a structure of an SRS transmission apparatus 700 in a network device according to this application. As shown in FIG. 7, the apparatus 700 is used in the network device, and may include a sending module 701, a receiving module 702, and a processing module 703.

The sending module 701 is configured to send configuration information of a channel sounding reference signal SRS resource set to a terminal device, where the SRS resource set includes a plurality of SRS resources, each SRS resource includes at least one port, the terminal device includes eight receive antennas, and M antennas and 8-M antennas in the eight receive antennas respectively belong to a first antenna set and a second antenna set. The receiving module 702 is configured to separately receive, through the at least one port included in each of the plurality of SRS resources, an SRS sent by the terminal device, where the SRS is for measuring an uplink channel of an antenna corresponding to the port in the SRS resource. The processing module 703 is configured to determine, based on the SRS resource, a target antenna set to which the antenna corresponding to the port in the SRS resource belongs, where the target antenna set is the first antenna set or the second antenna set.

In a possible implementation, the processing module 703 is further configured to obtain, based on the SRS resource, a downlink channel of the antenna corresponding to the port in the SRS resource.

In a possible implementation, the sending module 701 is further configured to send a correspondence between a port for DMRS downlink transmission and a set identifier to the terminal device. The set identifier is an identifier of the first antenna set or an identifier of the second antenna set.

In a possible implementation, the processing module 703 is further configured to divide the eight receive antennas into two groups, to obtain the first antenna set and the second antenna set. The sending module is further configured to send second grouping information to the terminal device. The second grouping information indicates the first antenna set and the second antenna set.

In a possible implementation, when a quantity of transmit antenna ports of the terminal device is 1 and a quantity of receive antenna ports is 8, the SRS resource set includes eight SRS resources, and each SRS resource includes one port.

One antenna corresponding to one port included in each of four SRS resources in the eight SRS resources belongs to the first antenna set, one antenna corresponding to one port included in each of the other four SRS resources in the eight SRS resources belongs to the second antenna set, and there is no intersection of the antennas corresponding to the different ports.

In a possible implementation, when the quantity of transmit antenna ports of the terminal device is 2 and the quantity of receive antenna ports is 8, the SRS resource set includes four SRS resources, and each SRS resource includes two ports.

Two antennas corresponding to two ports included in each of two SRS resources in the four SRS resources belong to the first antenna set, two antennas corresponding to two ports included in each of the other two SRS resources in the four SRS resources belong to the second antenna set, and there is no intersection of the antennas corresponding to the different ports.

In a possible implementation, when the quantity of transmit antenna ports of the terminal device is 4 and the quantity of receive antenna ports is 8, the SRS resource set includes two SRS resources, and each SRS resource includes four ports.

Four antennas corresponding to four ports included in one SRS resource in the two SRS resources belong to the first antenna set, four antennas corresponding to four ports included in the other SRS resource in the two SRS resources belong to the second antenna set, and there is no intersection of the antennas corresponding to the different ports.

In a possible implementation, when the quantity of transmit antenna ports of the terminal device is 6 and the quantity of receive antenna ports is 8, the SRS resource set includes three SRS resources.

A first SRS resource includes two ports, a second SRS resource includes four ports, and a third SRS resource includes two ports.

Two antennas corresponding to the two ports included in the first SRS resource belong to the first antenna set, four antennas corresponding to the four ports included in the second SRS resource belong to the second antenna set, two antennas corresponding to the two ports included in the third SRS resource belong to the first antenna set, and there is no intersection of the antennas corresponding to the different ports.

In a possible implementation, when the quantity of transmit antenna ports of the terminal device is 8 and the quantity of receive antenna ports is 8, the SRS resource set includes one SRS resource, and the SRS resource includes eight ports.

Four antennas corresponding to four ports included in the SRS resource belong to the first antenna set, four antennas corresponding to the other four ports included in the SRS resource belong to the second antenna set, and there is no intersection of the antennas corresponding to the different ports.

In a possible implementation, the SRS is a precoded sounding reference signal precoded SRS.

In a possible implementation, when the quantity of transmit antenna ports of the terminal device is 4 and the quantity of receive antenna ports is 8, the SRS resource set includes two SRS resources.

A first SRS resource includes n1 ports, and a second SRS resource includes n2 ports.

Four antennas corresponding to each of the n1 ports included in the first SRS resource belong to the first antenna set, and four antennas corresponding to each of the n2 ports included in the second SRS resource belong to the second antenna set, where n1≤4, and n2≤4.

In a possible implementation, when the quantity of transmit antenna ports of the terminal device is 8 and the quantity of receive antenna ports is 8, the SRS resource set includes one SRS resource, and the SRS resource includes n1+n2 ports.

Four antennas corresponding to each of the n1 ports included in the SRS resource belong to the first antenna set, and four antennas corresponding to each of the other n2 ports included in the SRS resource belong to the second antenna set, where n1≤4, and n2≤4.

In a possible implementation, a port used by an antenna in the first antenna set to send an SRS and a port used by an antenna in the second antenna set to send an SRS are distinguished by using combs; a port used by an antenna in the first antenna set to send an SRS and a port used by an antenna in the second antenna set to send an SRS are distinguished by using cyclic shifts; a port used by an antenna in the first antenna set to send an SRS and a port used by an antenna in the second antenna set to send an SRS are distinguished by using port indexes; or a port used by an antenna in the first antenna set to send an SRS and a port used by an antenna in the second antenna set to send an SRS are distinguished by using two adjacent symbols.

The apparatus in this embodiment may be configured to perform the technical solutions performed by the network device in the foregoing method embodiment shown in FIG. 5. Implementation principles and technical effects thereof are similar, and details are not described herein again.

In an implementation process, steps in the foregoing method embodiments can be implemented by using a hardware integrated logic circuit in the processor, or by using instructions in a form of software. The processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

The memory in the foregoing embodiments may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the system and method described in this specification includes but is not limited to these and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logic function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions in this application essentially, or the part contributing to the conventional technology, or a part of the technical solutions may be implemented in a form of a software product. The computer software product is stored in a storage medium and includes several instructions for instructing a computer device (a personal computer, a server, a network device, or the like) to perform all or a part of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An SRS transmission method, applied to a terminal device, wherein the terminal device comprises eight receive antennas, and the method comprises:

   obtaining a channel sounding reference signal SRS resource set, wherein the SRS resource set comprises a plurality of SRS resources, and each SRS resource comprises at least one port; determining a first antenna set and a second antenna set, wherein the first antenna set and the second antenna set respectively comprise M antennas and 8-M antennas in the eight receive antennas, and M is a positive integer; determining an antenna corresponding to the at least one port comprised in each of the plurality of SRS resources, wherein at least one antenna corresponding to the at least one port comprised in each SRS resource belongs to the first antenna set or the second antenna set; and separately sending an SRS for measuring an uplink channel of the corresponding antenna to a base station through the at least one port comprised in each SRS resource.

2. The method according to claim 1, wherein the determining a first antenna set and a second antenna set comprises:
   dividing the eight receive antennas into two groups according to a preset rule, to obtain the first antenna set and the second antenna set.

3. The method according to claim 1, wherein the determining a first antenna set and a second antenna set comprises:

   receiving a channel state information reference signal CSI-RS sent by the network device; and dividing the eight receive antennas into two groups based on the CSI-RS, to obtain the first antenna set and the second antenna set.

4. The method according to claim 2 or 3, wherein after the determining a first antenna set and a second antenna set, the method further comprises:
   sending first grouping information to the network device, wherein the first grouping information indicates SRS resources respectively corresponding to the first antenna set and the second antenna set.

5. The method according to any one of claims 1 to 4, wherein when a quantity of transmit antenna ports of the terminal device is 1 and a quantity of receive antenna ports is 8, the SRS resource set comprises eight SRS resources, and each SRS resource comprises one port; and
   one port comprised in each of four SRS resources in the eight SRS resources corresponds to one of four antennas in the first antenna set, one port comprised in each of the other four SRS resources in the eight SRS resources corresponds to one of four antennas in the second antenna set, and there is no intersection of the antennas corresponding to the different ports.

6. The method according to any one of claims 1 to 5, wherein when the quantity of transmit antenna ports of the terminal device is 2 and the quantity of receive antenna ports is 8, the SRS resource set comprises four SRS resources, and each SRS resource comprises two ports; and
   two ports comprised in each of two SRS resources in the four SRS resources correspond to two of the four antennas in the first antenna set, two ports comprised in each of the other two SRS resources in the four SRS resources correspond to two of the four antennas in the second antenna set, and there is no intersection of the antennas corresponding to the different ports.

7. The method according to any one of claims 1 to 6, wherein when the quantity of transmit antenna ports of the terminal device is 4 and the quantity of receive antenna ports is 8, the SRS resource set comprises two SRS resources, and each SRS resource comprises four ports; and
   four ports comprised in one SRS resource in the two SRS resources correspond to the four antennas in the first antenna set, four ports comprised in the other SRS resource in the two SRS resources correspond to the four antennas in the second antenna set, and there is no intersection of the antennas corresponding to the different ports.

8. The method according to any one of claims 1 to 7, wherein when the quantity of transmit antenna ports of the terminal device is 6 and the quantity of receive antenna ports is 8, the SRS resource set comprises three SRS resources;

   a first SRS resource comprises two ports, a second SRS resource comprises four ports, and a third SRS resource comprises two ports; and
   the two ports comprised in the first SRS resource correspond to two of the four antennas in the first antenna set, the four ports comprised in the second SRS resource correspond to the four antennas in the second antenna set, the two ports comprised in the third SRS resource correspond to the other two of the four antennas in the first antenna set, and there is no intersection of the antennas corresponding to the different ports.

9. The method according to any one of claims 1 to 8, wherein when the quantity of transmit antenna ports of the terminal device is 8 and the quantity of receive antenna ports is 8, the SRS resource set comprises one SRS resource, and the SRS resource comprises eight ports; and
four ports comprised in the SRS resource correspond to the four antennas in the first antenna set, the other four ports comprised in the SRS resource correspond to the four antennas in the second antenna set, and there is no intersection of the antennas corresponding to the different ports.

10. The method according to any one of claims 1 to 9, wherein the SRS is a precoded sounding reference signal precoded SRS.

11. The method according to claim 10, wherein when the quantity of transmit antenna ports of the terminal device is 4 and the quantity of receive antenna ports is 8, the SRS resource set comprises two SRS resources;

a first SRS resource comprises n1 ports, and a second SRS resource comprises n2 ports; and each of the n1 ports comprised in the first SRS resource corresponds to the four antennas in the first antenna set, and each of the n2 ports comprised in the second SRS resource corresponds to the four antennas in the second antenna set, wherein n1≤4, and n2≤4.

12. The method according to claim 10 or 11, wherein when the quantity of transmit antenna ports of the terminal device is 8 and the quantity of receive antenna ports is 8, the SRS resource set comprises one SRS resource, and the SRS resource comprises n1+n2 ports; and
each of n1 ports comprised in the SRS resource corresponds to the four antennas in the first antenna set, and each of the other n2 ports comprised in the SRS resource corresponds to the four antennas in the second antenna set, wherein n1≤4, and n2≤4.

13. The method according to claim 9 or 12, wherein a port used by an antenna in the first antenna set to send an SRS and a port used by an antenna in the second antenna set to send an SRS are distinguished by using combs; a port used by an antenna in the first antenna set to send an SRS and a port used by an antenna in the second antenna set to send an SRS are distinguished by using cyclic shifts; a port used by an antenna in the first antenna set to send an SRS and a port used by an antenna in the second antenna set to send an SRS are distinguished by using port indexes; or a port used by an antenna in the first antenna set to send an SRS and a port used by an antenna in the second antenna set to send an SRS are distinguished by using two adjacent symbols.

14. The method according to any one of claims 10 to 13, wherein the method further comprises:

obtaining a first precoder U and a second precoder U, wherein the first precoder U corresponds to the first antenna set, and the second precoder U corresponds to the second antenna set; and
sending the first precoder U and the second precoder U to the network device.

15. The method according to claim 14, wherein before the sending the first precoder U and the second precoder U to the network device, the method further comprises:

obtaining precoding indication information, wherein the precoding indication information indicates a precoding scheme of the network device; and
the sending the first precoder U and the second precoder U to the network device comprises:
when the precoding scheme of the network device is a non-linear precoding scheme, sending the first precoder U and the second precoder U to the network device.

16. The method according to claim 14 or 15, wherein the first precoder U and the second precoder U have a same frequency domain granularity.

17. The method according to any one of claims 14 to 16, wherein the obtaining a first precoder U and a second precoder U comprises:

obtaining a downlink channel based on the received CSI-RS; and
obtaining the first precoder U and the second precoder U based on the downlink channel.

18. The method according to any one of claims 14 to 17, wherein a first column of a first matrix of the first precoder U consists entirely of real numbers, and a first column of a second matrix of the second precoder U consists entirely of real numbers.

19. The method according to any one of claims 14 to 18, wherein an element with a largest modulus comprised in the first matrix of the first precoder U and the second matrix of the second precoder U is located in the first column of the first matrix or the first column of the second matrix.

**20.** The method according to any one of claims 14 to 19, wherein the first matrix of the first precoder U and the second matrix of the second precoder U are separately obtained through normalization based on the element with the largest modulus.

**21.** An SRS transmission method, applied to a network device, wherein the method comprises:

sending configuration information of a channel sounding reference signal SRS resource set to a terminal device, wherein the SRS resource set comprises a plurality of SRS resources, each SRS resource comprises at least one port, the terminal device comprises eight receive antennas, and M antennas and 8-M antennas in the eight receive antennas respectively belong to a first antenna set and a second antenna set;

separately receiving, through the at least one port comprised in each of the plurality of SRS resources, an SRS sent by the terminal device, wherein the SRS is for measuring an uplink channel of an antenna corresponding to the port in the SRS resource; and

determining, based on the SRS resource, a target antenna set to which the antenna corresponding to the port in the SRS resource belongs, wherein the target antenna set is the first antenna set or the second antenna set.

**22.** The method according to claim 21, wherein after the determining, based on the SRS resource, a target antenna set to which the antenna corresponding to the port in the SRS resource belongs, the method further comprises:

obtaining, based on the SRS resource, a downlink channel of the antenna corresponding to the port in the SRS resource.

**23.** The method according to claim 22, wherein after the obtaining, based on the SRS resource, a downlink channel of the antenna corresponding to the port in the SRS resource, the method further comprises:

sending a correspondence between a port for DMRS downlink transmission and a set identifier to the terminal device, wherein the set identifier is an identifier of the first antenna set or an identifier of the second antenna set.

**24.** The method according to any one of claims 21 to 23, further comprising:

dividing the eight receive antennas into two groups, to obtain the first antenna set and the second antenna set; and

sending second grouping information to the terminal device, wherein the second grouping information indicates the first antenna set and the second antenna set.

**25.** The method according to any one of claims 21 to 24, wherein when a quantity of transmit antenna ports of the terminal device is 1 and a quantity of receive antenna ports is 8, the SRS resource set comprises eight SRS resources, and each SRS resource comprises one port; and

one antenna corresponding to one port comprised in each of four SRS resources in the eight SRS resources belongs to the first antenna set, one antenna corresponding to one port comprised in each of the other four SRS resources in the eight SRS resources belongs to the second antenna set, and there is no intersection of the antennas corresponding to the different ports.

**26.** The method according to any one of claims 21 to 25, wherein when the quantity of transmit antenna ports of the terminal device is 2 and the quantity of receive antenna ports is 8, the SRS resource set comprises four SRS resources, and each SRS resource comprises two ports; and

two antennas corresponding to two ports comprised in each of two SRS resources in the four SRS resources belong to the first antenna set, two antennas corresponding to two ports comprised in each of the other two SRS resources in the four SRS resources belong to the second antenna set, and there is no intersection of the antennas corresponding to the different ports.

**27.** The method according to any one of claims 21 to 26, wherein when the quantity of transmit antenna ports of the terminal device is 4 and the quantity of receive antenna ports is 8, the SRS resource set comprises two SRS resources, and each SRS resource comprises four ports; and

four antennas corresponding to four ports comprised in one SRS resource in the two SRS resources belong to the first antenna set, four antennas corresponding to four ports comprised in the other SRS resource in the two SRS resources belong to the second antenna set, and there is no intersection of the antennas corresponding to the different ports.

**28.** The method according to any one of claims 21 to 27, wherein when the quantity of transmit antenna ports of the terminal device is 6 and the quantity of receive antenna ports is 8, the SRS resource set comprises three SRS resources;

a first SRS resource comprises two ports, a second SRS resource comprises four ports, and a third SRS resource comprises two ports; and

two antennas corresponding to the two ports comprised in the first SRS resource belong to the first antenna set, four antennas corresponding to the four ports comprised in the second SRS resource belong to the second antenna set, two antennas corresponding to the two ports comprised in the third SRS resource belong to the first antenna set, and there is no intersection of the antennas corresponding to the different ports.

29. The method according to any one of claims 21 to 28, wherein when the quantity of transmit antenna ports of the terminal device is 8 and the quantity of receive antenna ports is 8, the SRS resource set comprises one SRS resource, and the SRS resource comprises eight ports; and
four antennas corresponding to four ports comprised in the SRS resource belong to the first antenna set, four antennas corresponding to the other four ports comprised in the SRS resource belong to the second antenna set, and there is no intersection of the antennas corresponding to the different ports.

30. The method according to any one of claims 21 to 29, wherein the SRS is a precoded sounding reference signal precoded SRS.

31. The method according to claim 30, wherein when the quantity of transmit antenna ports of the terminal device is 4 and the quantity of receive antenna ports is 8, the SRS resource set comprises two SRS resources;

a first SRS resource comprises n1 ports, and a second SRS resource comprises n2 ports; and four antennas corresponding to each of the n1 ports comprised in the first SRS resource belong to the first antenna set, and four antennas corresponding to each of the n2 ports comprised in the second SRS resource belong to the second antenna set, wherein $n1 \leq 4$, and $n2 \leq 4$.

32. The method according to claim 30 or 31, wherein when the quantity of transmit antenna ports of the terminal device is 8 and the quantity of receive antenna ports is 8, the SRS resource set comprises one SRS resource, and the SRS resource comprises n1+n2 ports; and
four antennas corresponding to each of the n1 ports comprised in the SRS resource belong to the first antenna set, and four antennas corresponding to each of the other n2 ports comprised in the SRS resource belong to the second antenna set, wherein $n1 \leq 4$, and $n2 \leq 4$.

33. The method according to claim 29 or 32, wherein a port used by an antenna in the first antenna set to send an SRS and a port used by an antenna in the second antenna set to send an SRS are distinguished by using combs; a port used by an antenna in the first antenna set to send an SRS and a port used by an antenna in the second antenna set to send an SRS are distinguished by using cyclic shifts; a port used by an antenna in the first antenna set to send an SRS and a port used by an antenna in the second antenna set to send an SRS are distinguished by using port indexes; or a port used by an antenna in the first antenna set to send an SRS and a port used by an antenna in the second antenna set to send an SRS are distinguished by using two adjacent symbols.

34. An SRS transmission apparatus, used in a terminal device, wherein the terminal device comprises eight receive antennas, and the apparatus comprises:

an obtaining module, configured to obtain a channel sounding reference signal SRS resource set, wherein the SRS resource set comprises a plurality of SRS resources, and each SRS resource comprises at least one port; a processing module, configured to: determine a first antenna set and a second antenna set, wherein the first antenna set and the second antenna set respectively comprise M antennas and 8-M antennas in the eight receive antennas, and M is a positive integer; and determine an antenna corresponding to the at least one port comprised in each of the plurality of SRS resources, wherein at least one antenna corresponding to the at least one port comprised in each SRS resource belongs to the first antenna set or the second antenna set; and a sending module, configured to: separately send an SRS for measuring an uplink channel of the corresponding antenna to a base station through the at least one port comprised in each SRS resource.

35. The apparatus according to claim 34, wherein the processing module is specifically configured to divide the eight receive antennas into two groups according to a preset rule, to obtain the first antenna set and the second antenna set.

36. The apparatus according to claim 34, wherein the processing module is specifically configured to: receive a channel state information reference signal CSI-RS sent by the network device; and divide the eight receive antennas into two groups based on the CSI-RS, to obtain the first antenna set and the second antenna set.

37. The apparatus according to claim 35 or 36, wherein the sending module is further configured to send first grouping information to the network device, wherein the first grouping information indicates SRS resources respectively corresponding to the first antenna set and the second antenna set.

38. The apparatus according to any one of claims 34 to 37, wherein when a quantity of transmit antenna ports of the terminal device is 1 and a quantity of receive antenna ports is 8, the SRS resource set comprises eight SRS resources, and each SRS resource comprises one port; and
one port comprised in each of four SRS resources in the eight SRS resources corresponds to one of four antennas in the first antenna set, one port comprised in each of the other four SRS resources in the eight SRS resources corresponds to one of four antennas in the second antenna set, and there is no intersection of the antennas corresponding to the different ports.

39. The apparatus according to any one of claims 34 to 38, wherein when the quantity of transmit antenna ports of the terminal device is 2 and the quantity of receive antenna ports is 8, the SRS resource set comprises four SRS resources, and each SRS resource comprises two ports; and
two ports comprised in each of two SRS resources in the four SRS resources correspond to two of the four antennas in the first antenna set, two ports comprised in each of the other two SRS resources in the four SRS resources correspond to two of the four antennas in the second antenna set, and there is no intersection of the antennas corresponding to the different ports.

40. The apparatus according to any one of claims 34 to 39, wherein when the quantity of transmit antenna ports of the terminal device is 4 and the quantity of receive antenna ports is 8, the SRS resource set comprises two SRS resources, and each SRS resource comprises four ports; and
four ports comprised in one SRS resource in the two SRS resources correspond to the four antennas in the first antenna set, four ports comprised in the other SRS resource in the two SRS resources correspond to the four antennas in the second antenna set, and there is no intersection of the antennas corresponding to the different ports.

41. The apparatus according to any one of claims 34 to 40, wherein when the quantity of transmit antenna ports of the terminal device is 6 and the quantity of receive antenna ports is 8, the SRS resource set comprises three SRS resources;

a first SRS resource comprises two ports, a second SRS resource comprises four ports, and a third SRS resource comprises two ports; and
the two ports comprised in the first SRS resource correspond to two of the four antennas in the first antenna set, the four ports comprised in the second SRS resource correspond to the four antennas in the second antenna set, the two ports comprised in the third SRS resource correspond to the other two of the four antennas in the first antenna set, and there is no intersection of the antennas corresponding to the different ports.

42. The apparatus according to any one of claims 34 to 41, wherein when the quantity of transmit antenna ports of the terminal device is 8 and the quantity of receive antenna ports is 8, the SRS resource set comprises one SRS resource, and the SRS resource comprises eight ports; and
four ports comprised in the SRS resource correspond to the four antennas in the first antenna set, the other four ports comprised in the SRS resource correspond to the four antennas in the second antenna set, and there is no intersection of the antennas corresponding to the different ports.

43. The apparatus according to any one of claims 34 to 42, wherein the SRS is a precoded sounding reference signal precoded SRS.

44. The apparatus according to claim 43, wherein when the quantity of transmit antenna ports of the terminal device is 4 and the quantity of receive antenna ports is 8, the SRS resource set comprises two SRS resources;

a first SRS resource comprises n1 ports, and a second SRS resource comprises n2 ports; and each of the n1 ports comprised in the first SRS resource corresponds to the four antennas in the first antenna set, and each of the n2 ports comprised in the second SRS resource corresponds to the four antennas in the second antenna set, wherein $n1 \leq 4$, and $n2 \leq 4$.

45. The apparatus according to claim 43 or 44, wherein when the quantity of transmit antenna ports of the terminal device is 8 and the quantity of receive antenna ports is 8, the SRS resource set comprises one SRS resource, and the SRS resource comprises n1+n2 ports; and
each of n1 ports comprised in the SRS resource corresponds to the four antennas in the first antenna set, and each of the other n2 ports comprised in the SRS resource corresponds to the four antennas in the second antenna set, wherein $n1 \leq 4$, and $n2 \leq 4$.

46. The apparatus according to claim 42 or 45, wherein a port used by an antenna in the first antenna set to send an SRS and a port used by an antenna in the second antenna set to send an SRS are distinguished by using combs; a port used by an antenna in the first antenna set to send an SRS and a port used by an antenna in the second antenna set to send an SRS are distinguished by using cyclic shifts; a port used by an antenna in the first antenna set to send an SRS and a port used by an antenna in the second antenna set to send an SRS are distinguished by using port indexes; or a port used by an antenna in the first antenna set to send an SRS and a port used by an antenna in the second antenna set to send an SRS are distinguished by using two adjacent symbols.

47. The apparatus according to any one of claims 43 to 46, wherein the obtaining module is further configured to obtain a first precoder U and a second precoder U, wherein the first precoder U corresponds to the first antenna set, and the second precoder U corresponds to the second antenna set; and
the sending module is further configured to send the first precoder U and the second precoder U to the network device.

48. The apparatus according to claim 47, wherein the obtaining module is further configured to obtain precoding indication information, wherein the precoding indication information indicates a precoding scheme of the network device; and
the sending module is specifically configured to: when the precoding scheme of the network device is a non-linear precoding scheme, send the first precoder U and the second precoder U to the network device.

49. The apparatus according to claim 47 or 48, wherein the first precoder U and the second precoder U have a same frequency domain granularity.

50. The apparatus according to any one of claims 47 to 49, wherein the obtaining module is specifically configured to: obtain a downlink channel based on the received CSI-RS; and obtain the first precoder U and the second precoder U based on the downlink channel.

51. The apparatus according to any one of claims 47 to 50, wherein a first column of a first matrix of the first precoder U consists entirely of real numbers, and a first column of a second matrix of the second precoder U consists entirely of real numbers.

52. The apparatus according to any one of claims 47 to 51, wherein an element with a largest modulus comprised in the first matrix of the first precoder U and the second matrix of the second precoder U is located in the first column of the first matrix or the first column of the second matrix.

53. The apparatus according to any one of claims 47 to 52, wherein the first matrix of the first precoder U and the second matrix of the second precoder U are separately obtained through normalization based on the element with the largest modulus.

54. An SRS transmission apparatus, used in a network device, wherein the apparatus comprises:

a sending module, configured to send configuration information of a channel sounding reference signal SRS resource set to a terminal device, wherein the SRS resource set comprises a plurality of SRS resources, each SRS resource comprises at least one port, the terminal device comprises eight receive antennas, and M antennas and 8-M antennas in the eight receive antennas respectively belong to a first antenna set and a second antenna set;
a receiving module, configured to separately receive, through the at least one port comprised in each of the plurality of SRS resources, an SRS sent by the terminal device, wherein the SRS is for measuring an uplink channel of an antenna corresponding to the port in the SRS resource; and
a processing module, configured to determine, based on the SRS resource, a target antenna set to which the antenna corresponding to the port in the SRS resource belongs, wherein the target antenna set is the first antenna set or the second antenna set.

55. The apparatus according to claim 54, wherein the processing module is further configured to obtain, based on the SRS resource, a downlink channel of the antenna corresponding to the port in the SRS resource.

56. The apparatus according to claim 55, wherein the sending module is further configured to send a correspondence between a port for DMRS downlink transmission and a set identifier to the terminal device, wherein the set identifier is an identifier of the first antenna set or an identifier of the second antenna set.

57. The apparatus according to any one of claims 54 to 56, wherein the processing module is further configured to divide the eight receive antennas into two groups, to obtain the first antenna set and the second antenna set; and
the sending module is further configured to send second grouping information to the terminal device, wherein the second grouping information indicates the first antenna set and the second antenna set.

58. The apparatus according to any one of claims 54 to 57, wherein when a quantity of transmit antenna ports of the terminal device is 1 and a quantity of receive antenna ports is 8, the SRS resource set comprises eight SRS resources, and each SRS resource comprises one port; and
one antenna corresponding to one port comprised in each of four SRS resources in the eight SRS resources belongs to the first antenna set, one antenna corresponding to one port comprised in each of the other four SRS resources in the eight SRS resources belongs to the second antenna set, and there is no intersection of the antennas corresponding to the different ports.

59. The apparatus according to any one of claims 54 to 58, wherein when the quantity of transmit antenna ports of the terminal device is 2 and the quantity of receive antenna ports is 8, the SRS resource set comprises four SRS resources, and each SRS resource comprises two ports; and
two antennas corresponding to two ports comprised in each of two SRS resources in the four SRS resources belong to the first antenna set, two antennas corresponding to two ports comprised in each of the other two SRS resources in the four SRS resources belong to the second antenna set, and there is no intersection of the antennas corresponding to the different ports.

60. The apparatus according to any one of claims 54 to 59, wherein when the quantity of transmit antenna ports of the terminal device is 4 and the quantity of receive antenna ports is 8, the SRS resource set comprises two SRS resources, and each SRS resource comprises four ports; and
four antennas corresponding to four ports comprised in one SRS resource in the two SRS resources belong to the first antenna set, four antennas corresponding to four ports comprised in the other SRS resource in the two SRS resources belong to the second antenna set, and there is no intersection of the antennas corresponding to the different ports.

61. The apparatus according to any one of claims 54 to 60, wherein when the quantity of transmit antenna ports of the terminal device is 6 and the quantity of receive antenna ports is 8, the SRS resource set comprises three SRS resources;

a first SRS resource comprises two ports, a second SRS resource comprises four ports, and a third SRS resource comprises two ports; and
two antennas corresponding to the two ports comprised in the first SRS resource belong to the first antenna set, four antennas corresponding to the four ports comprised in the second SRS resource belong to the second antenna set, two antennas corresponding to the two ports comprised in the third SRS resource belong to the first antenna set, and there is no intersection of the antennas corresponding to the different ports.

62. The apparatus according to any one of claims 54 to 61, wherein when the quantity of transmit antenna ports of the terminal device is 8 and the quantity of receive antenna ports is 8, the SRS resource set comprises one SRS resource, and the SRS resource comprises eight ports; and
four antennas corresponding to four ports comprised in the SRS resource belong to the first antenna set, four antennas corresponding to the other four ports comprised in the SRS resource belong to the second antenna set, and there is no intersection of the antennas corresponding to the different ports.

63. The apparatus according to any one of claims 54 to 62, wherein the SRS is a precoded sounding reference signal precoded SRS.

64. The apparatus according to claim 63, wherein when the quantity of transmit antenna ports of the terminal device is 4 and the quantity of receive antenna ports is 8, the SRS resource set comprises two SRS resources;

a first SRS resource comprises n1 ports, and a second SRS resource comprises n2 ports; and
four antennas corresponding to each of the n1 ports comprised in the first SRS resource belong to the first antenna set, and four antennas corresponding to each of the n2 ports comprised in the second SRS resource belong to the second antenna set, wherein $n1 \leq 4$, and $n2 \leq 4$.

65. The apparatus according to claim 63 or 64, wherein when the quantity of transmit antenna ports of the terminal device is 8 and the quantity of receive antenna ports is 8, the SRS resource set comprises one SRS resource, and the SRS resource comprises n1+n2 ports; and
four antennas corresponding to each of the n1 ports comprised in the SRS resource belong to the first antenna set, and four antennas corresponding to each of the other n2 ports comprised in the SRS resource belong to the second antenna set, wherein $n1 \leq 4$, and $n2 \leq 4$.

66. The apparatus according to claim 62 or 65, wherein a port used by an antenna in the first antenna set to send an SRS and a port used by an antenna in the second antenna set to send an SRS are distinguished by using combs; a port used by an antenna in the first antenna set to send an SRS and a port used by an antenna in the second antenna set to send an SRS are distinguished by using cyclic shifts; a port used by an antenna in the first antenna set to send an SRS and a port used by an antenna in the second antenna set to send an SRS are distinguished by using port indexes; or a port used by an antenna in the first antenna set to send an SRS and a port used by an antenna in the second antenna set to send an SRS are distinguished by using two adjacent symbols.

67. A terminal device, comprising:

one or more processors; and
a memory, configured to store one or more programs, wherein
when the one or more programs are executed by the one or more processors, the one or more processors are enabled to implement the method according to any one of claims 1 to 20.

68. A terminal device, comprising:

one or more processors; and
a memory, configured to store one or more programs, wherein
when the one or more programs are executed by the one or more processors, the one or more processors are enabled to implement the method according to any one of claims 21 to 33.

69. A computer-readable storage medium, comprising a computer program, wherein when the computer program is executed on a computer, the computer is enabled to perform the method according to any one of claims 1 to 33.

70. A computer program, wherein when the computer program is executed by a computer, the method according to any one of claims 1 to 33 is performed.

FIG. 1

FIG. 2

FIG. 3

FIG. 4

500

```
┌─────────────────┐                                      ┌─────────────────┐
│ Network device  │                                      │ Terminal device │
└─────────────────┘                                      └─────────────────┘
```

501: Send configuration
information of an SRS resource set

502: Obtain the
SRS resource set

503: Determine a first antenna
set and a second antenna set

504: Determine an antenna
corresponding to at least one port
included in each of a plurality of
SRS resources

506: Separately receive, through
the at least one port included in
each of the plurality of SRS
resources, the SRS sent by the
terminal device

505: Separately send an SRS for
measuring an uplink channel of a
corresponding antenna to the base
station through the at least one
port included in each SRS
resource

507: Determine, based on the
SRS, a target antenna set to
which an antenna
corresponding to a port for
receiving the SRS belongs

508: Send a first downlink signal based
on an antenna in the first antenna set

509: Send a second downlink signal based
on an antenna in the second antenna set

FIG. 5

SRS transmission apparatus 600

Obtaining module 601

Processing module 602

Sending module 603

FIG. 6

SRS transmission apparatus 700

Sending module 701

Receiving module 702

Processing module 703

FIG. 7

# INTERNATIONAL SEARCH REPORT

| | International application No. |
|---|---|
| | **PCT/CN2023/103643** |

### A. CLASSIFICATION OF SUBJECT MATTER

H04W 24/02(2009.01)i

According to International Patent Classification (IPC) or to both national classification and IPC

### B. FIELDS SEARCHED

Minimum documentation searched (classification system followed by classification symbols)

IPC:H04W,H04L,H04B

Documentation searched other than minimum documentation to the extent that such documents are included in the fields searched

Electronic data base consulted during the international search (name of data base and, where practicable, search terms used)

CNABS, CNTXT, DWPI, VEN, ENTXT, 3GPP: 信道探测参考信号, 天线, 端口, 集合, 资源, 虚拟UE, 天线组, 天线面板, SRS, antenna, port, set, resource, virtual UE, gourp, panel

### C. DOCUMENTS CONSIDERED TO BE RELEVANT

| Category* | Citation of document, with indication, where appropriate, of the relevant passages | Relevant to claim No. |
|---|---|---|
| X | WO 2021159493 A1 (HUAWEI TECHNOLOGIES CO., LTD.) 19 August 2021 (2021-08-19) description, page 1, lines 14-15, page 2, lines 1-2, page 13, lines 2-8, and page 14, lines 28-31 | 1-70 |
| X | WO 2019096248 A1 (HUAWEI TECHNOLOGIES CO., LTD.) 23 May 2019 (2019-05-23) description page 10, lines 35-39, and page 12, lines 11-15 | 1-70 |
| A | CN 110535589 A (ZTE CORP.) 03 December 2019 (2019-12-03) entire document | 1-70 |
| A | CN 110838856 A (CHINA ACADEMY OF TELECOMMUNICATIONS TECHNOLOGY) 25 February 2020 (2020-02-25) entire document | 1-70 |
| A | CN 111769919 A (HUAWEI TECHNOLOGIES CO., LTD.) 13 October 2020 (2020-10-13) entire document | 1-70 |
| A | CN 113923780 A (HUAWEI TECHNOLOGIES CO., LTD.) 11 January 2022 (2022-01-11) entire document | 1-70 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 September 2023** | **25 September 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/103643** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2022075726 A1 (LG ELECTRONICS INC.) 14 April 2022 (2022-04-14) entire document | 1-70 |

Form PCT/ISA/210 (second sheet) (July 2022)

**INTERNATIONAL SEARCH REPORT**
Information on patent family members

International application No.

**PCT/CN2023/103643**

| Patent document cited in search report | | | Publication date (day/month/year) | Patent family member(s) | | | Publication date (day/month/year) |
|---|---|---|---|---|---|---|---|
| WO | 2021159493 | A1 | 19 August 2021 | US | 2023045308 | A1 | 09 February 2023 |
| | | | | EP | 4090063 | A1 | 16 November 2022 |
| | | | | CN | 115053555 | A | 13 September 2022 |
| WO | 2019096248 | A1 | 23 May 2019 | CN | 109802801 | A | 24 May 2019 |
| | | | | US | 2020052853 | A1 | 13 February 2020 |
| | | | | CN | 111295847 | A | 16 June 2020 |
| | | | | EP | 3672102 | A1 | 24 June 2020 |
| | | | | IN | 202017017524 | A | 04 September 2020 |
| | | | | BR | 112020008403 | A2 | 03 November 2020 |
| | | | | US | 2020374074 | A1 | 26 November 2020 |
| | | | | JP | 2021503819 | W | 12 February 2021 |
| | | | | NZ | 763969 | A2 | 25 March 2022 |
| | | | | US | 2022140973 | A1 | 05 May 2022 |
| | | | | CN | 114785467 | A | 22 July 2022 |
| | | | | EP | 4054088 | A1 | 07 September 2022 |
| CN | 110535589 | A | 03 December 2019 | CA | 3114463 | A1 | 02 April 2020 |
| | | | | US | 2021367655 | A1 | 25 November 2021 |
| | | | | EP | 3860021 | A1 | 04 August 2021 |
| | | | | WO | 2020063877 | A1 | 02 April 2020 |
| CN | 110838856 | A | 25 February 2020 | JP | 2021533701 | A | 02 December 2021 |
| | | | | KR | 20210046030 | A | 27 April 2021 |
| | | | | TW | 202010355 | A | 01 March 2020 |
| | | | | EP | 3826198 | A1 | 26 May 2021 |
| | | | | US | 2021168839 | A1 | 03 June 2021 |
| | | | | WO | 2020034831 | A1 | 20 February 2020 |
| CN | 111769919 | A | 13 October 2020 | | None | | |
| CN | 113923780 | A | 11 January 2022 | WO | 2022007967 | A1 | 13 January 2022 |
| WO | 2022075726 | A1 | 14 April 2022 | US | 2023275730 | A1 | 31 August 2023 |
| | | | | KR | 20230025428 | A | 21 February 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211058367X